# EUROPEAN PATENT APPLICATION

(11) **EP 4 290 450 A1**
(43) Date of publication of application: **13.12.2023**
(21) Application number: 21924827.5
(22) Date of filing: 13.12.2021
(51) Int. Cl.: G06T 7/00

(54) **INFERENCE DEVICE, INFERENCE METHOD, AND PROGRAM**

(30) Priority: 05.02.2021 JP 2021017343
(71) Applicant: Sony Group Corporation, Tokyo 108-0075 (JP)
(72) Inventor: OZAKI, Natsuko, Tokyo 108-0075 (JP)
(74) Representative: MFG Patentanwälte Meyer-Wildhagen Meggle-Freund Gerhard PartG mbB
(86) International application number: PCT/JP2021/045771
(87) International publication number: WO 2022/168442

(57) **Abstract**

[Object]

To estimate positions of predetermined areas of subjects more highly precisely.

[Solving Means]

Provided is a reasoning apparatus including an acquiring section that acquires second image data and a trained model obtained on the basis of a third reference position and a fourth reference position that are obtained by a moving process of moving a first reference position of a first subject captured in first image data and a second reference position of a second subject captured in the first image data away from each other, and a third relative position and a fourth relative position that are obtained on the basis of a first relative position of a predetermined area of the first subject relative to the first reference position, a second relative position of a predetermined area of the second subject relative to the second reference position and the moving process, and a reasoning section that obtains a fifth reference position of a third subject captured in the second image data and a fifth relative position of a predetermined area of the third subject relative to the fifth reference position on the basis of the trained model and the second image data.

## Description

### [Technical Field]

The present disclosure relates to a reasoning apparatus, a reasoning method, and a program.

### [Background Art]

In recent years, there have been known technologies for estimating a position of a subject captured in an image. For example, in a technology having been disclosed, a heat map representing a value of a center of a subject is introduced to a training process (e.g. see NPL 1). According to the technology, a center position of a subject captured in an image is estimated on the basis of results of a training process and the image. In addition, relative positions of predetermined areas of a subject relative to the center position of the subject are estimated on the basis of regression from the center position of the subject.

In another technology having been disclosed, an index (hereinbelow, also referred to as "centerness") that numerically expresses distances between the center position of a rectangular area (bounding box) surrounding a subject captured in an image and points present in the rectangular area is introduced into a training process (e.g. see NPL 2). According to the technology, the center position of a subject can be estimated on the basis of results of a training process into which the centerness has been introduced.

### [Citation List]

### [Non-Patent Literature]

[NPL 1]
   Xingyi Zhou and two others, "Object as Points," [online], arXiv1904.07850, the Internet (HTTPS://arxiv.org/PDF/1904.07850.PDF)
[NPL 2]
   Zhi Tian and three others, "FCOS: Fully Convolutional One-Stage Object Detection," [online], ICCV2019, the Internet,
   (HTTPS://arxiv.org/PDF/1904.01355.PDF)

### [Summary]

### [Technical Problem]

However, there can be cases where the center positions of a plurality of subjects captured in an image used for a training process are close to each other or overlap one on another. In such a case, the training process is performed undesirably while the center positions of the plurality of subjects remain close to each other or overlap one on another even if the positions of respective predetermined areas of the plurality of subjects are separate from each other. Thereby, there can be cases where precision of estimation of the positions of predetermined areas of subjects on the basis of training results is not improved.

In view of this, it is desirable if a technology to enable more highly precise estimation of the positions of predetermined areas of subjects is provided.

### [Solution to Problem]

The present disclosure provides a reasoning apparatus including an acquiring section that acquires second image data and a trained model obtained on the basis of a third reference position and a fourth reference position that are obtained by a moving process of moving a first reference position of a first subject captured in first image data and a second reference position of a second subject captured in the first image data away from each other, and a third relative position and a fourth relative position that are obtained on the basis of a first relative position of a predetermined area of the first subject relative to the first reference position, a second relative position of a predetermined area of the second subject relative to the second reference position and the moving process, and a reasoning section that obtains a fifth reference position of a third subject captured in the second image data and a fifth relative position of a predetermined area of the third subject relative to the fifth reference position on the basis of the trained model and the second image data.

The present disclosure provides a reasoning method including acquiring second image data and a trained model obtained on the basis of a third reference position and a fourth reference position that are obtained by a moving process of moving a first reference position of a first subject captured in first image data and a second reference position of a second subject captured in the first image data away from each other, and a third relative position and a fourth relative position that are obtained on the basis of a first relative position of a predetermined area of the first subject relative to the first reference position, a second relative position of a predetermined area of the second subject relative to the second reference position and the moving process, and obtaining a fifth reference position of a third subject captured in the second image data and a fifth relative position of a predetermined area of the third subject relative to the fifth reference position on the basis of the trained model and the second image data.

The present disclosure provides a program that causes a computer to function as a reasoning apparatus including an acquiring section that acquires second image data and a trained model obtained on the basis of a third reference position and a fourth reference position that are obtained by a moving process of moving a first reference position of a first subject captured in first image data and a second reference position of a second subject captured in the first image data away from each other, and a third relative position and a fourth relative position that are obtained on the basis of a first relative position of a predetermined area of the first subject relative to the first reference position, a second relative position of a predetermined area of the second subject relative to the second reference position and the moving process, and a reasoning section that obtains a fifth reference position of a third subject captured in the second image data and a fifth relative position of a predetermined area of the third subject relative to the fifth reference position on the basis of the trained model and the second image data.

### [Brief Description of Drawings]

[FIG. 1]

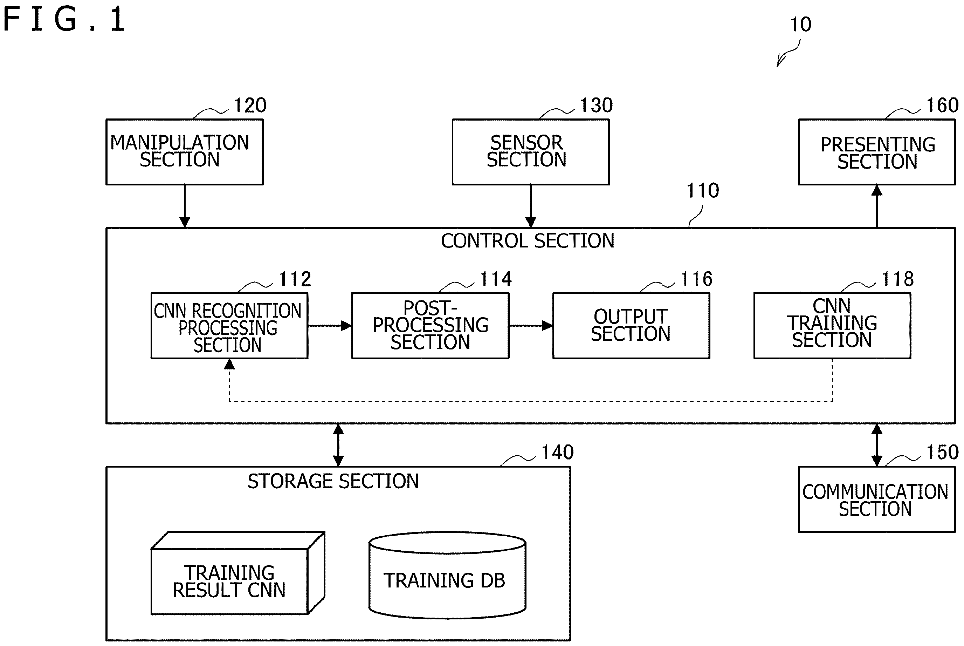

   FIG. 1 is a figure depicting a functional configuration example of an information processing system according to embodiments of the present disclosure.
[FIG. 2]

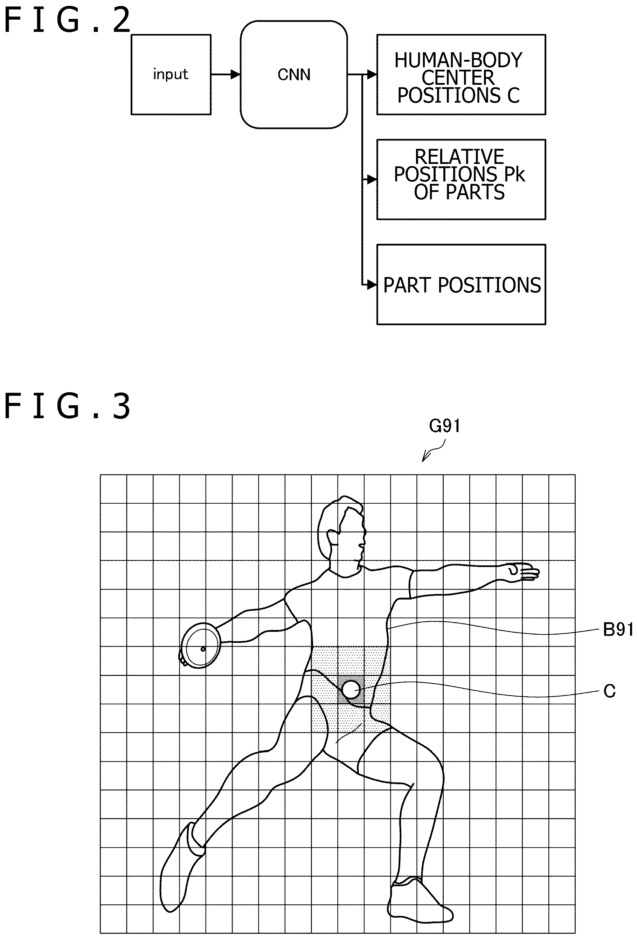

   FIG. 2 is a figure depicting an example of positions estimated by Disclosed Technology 1.
[FIG. 3]
   FIG. 3 is a figure depicting an example of a human-body-center heat map.
[FIG. 4]

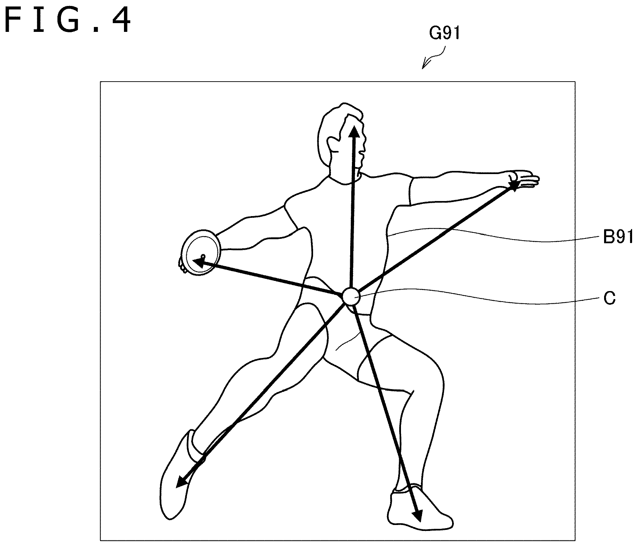

   FIG. 4 is a figure depicting an example of relative positions of parts relative to a human-body center position.
[FIG. 5]

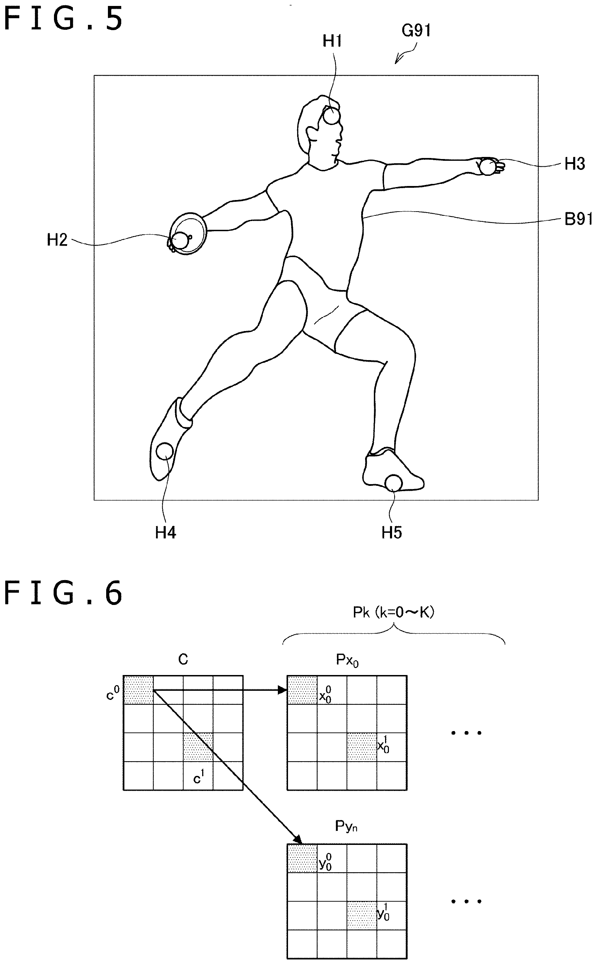

   FIG. 5 is a figure depicting an example of part positions estimated from a part position heat map.
[FIG. 6]
   FIG. 6 is a figure depicting an example of records of human-body center positions and relative positions of parts.
[FIG. 7]

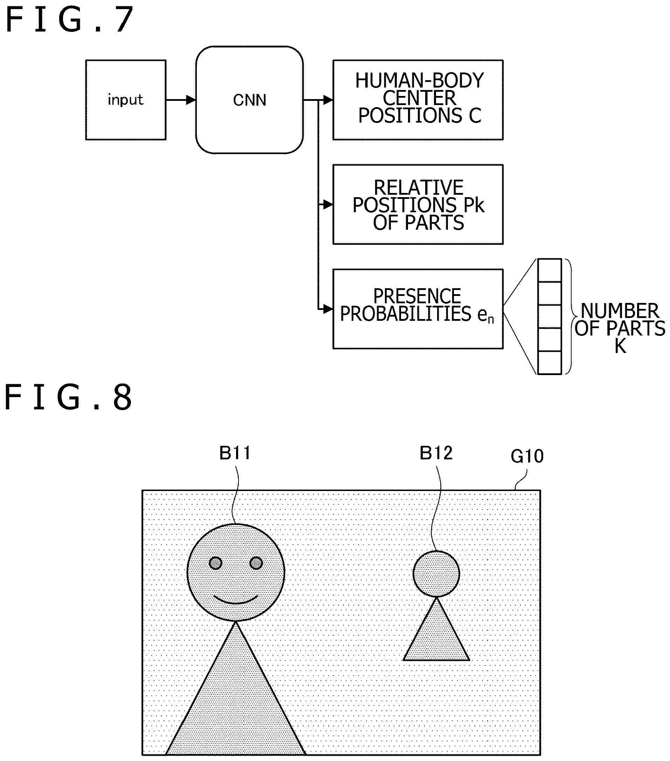

   FIG. 7 is a figure for explaining an overview of the information processing system according to a first embodiment of the present disclosure.
[FIG. 8]
   FIG. 8 is a figure depicting an example of an input image.
[FIG. 9]

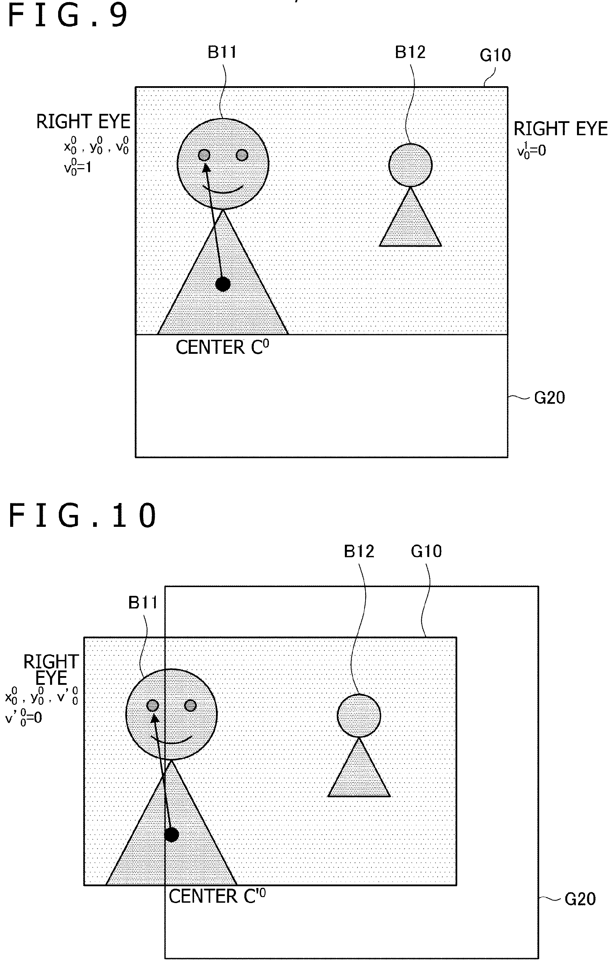

   FIG. 9 is a figure depicting an example of a training image.
[FIG. 10]
   FIG. 10 is a figure depicting a first example of processing and presence/absence information updating.
[FIG. 11]

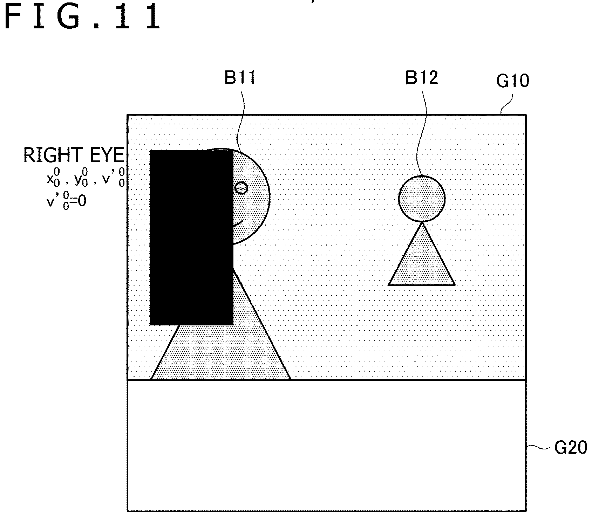

   FIG. 11 is a figure depicting a second example of the processing and the presence/absence information updating.
[FIG. 12]

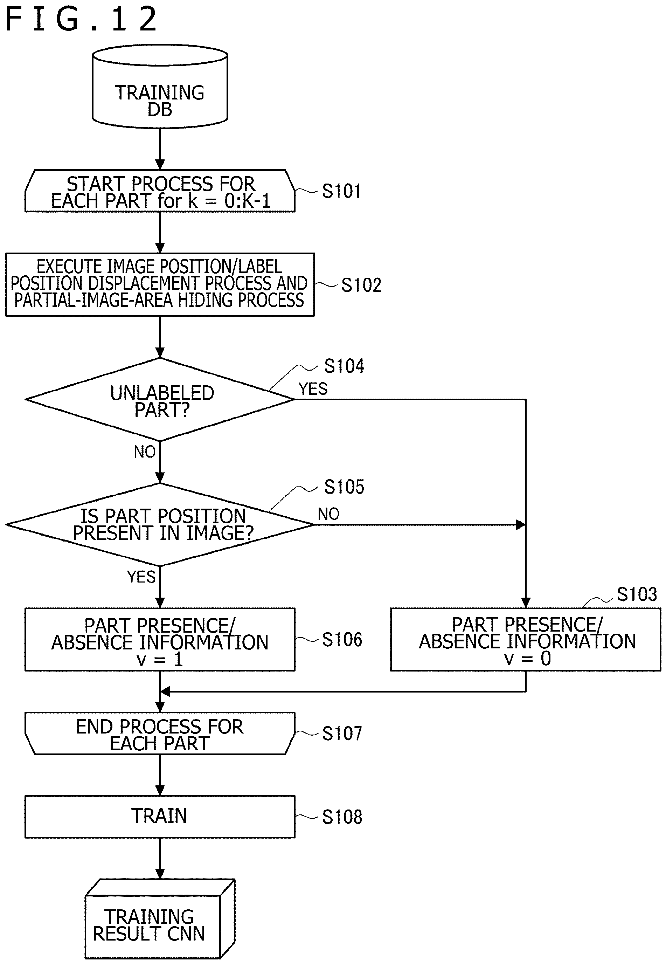

   FIG. 12 is a flowchart depicting an example of a procedure of a training step according to the first embodiment of the present disclosure.
[FIG. 13]

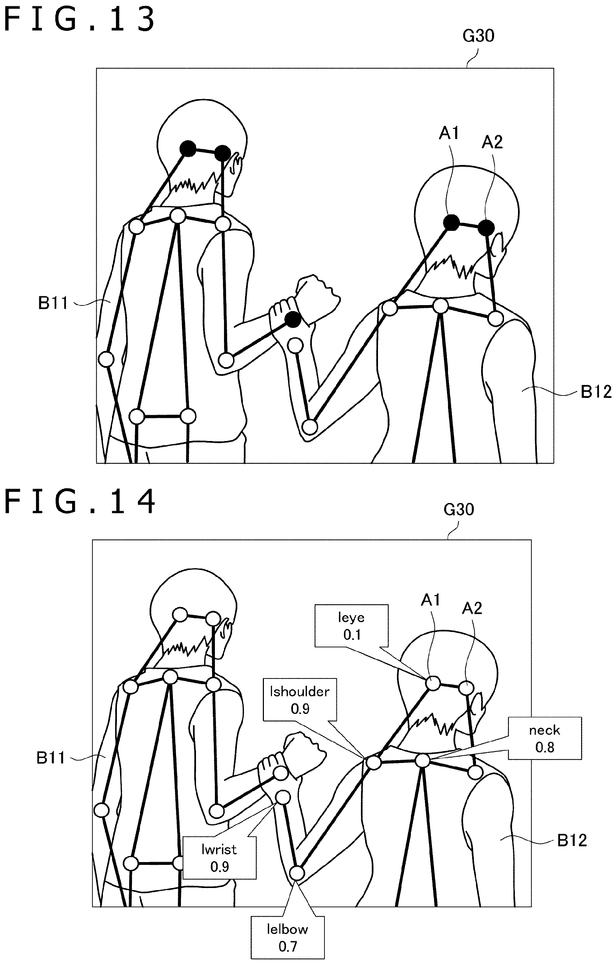

   FIG. 13 is a figure for explaining an example of information according to results of comparison between part presence probabilities and a threshold.
[FIG. 14]
   FIG. 14 is a figure for explaining an example of information representing the part presence probabilities.
[FIG. 15]

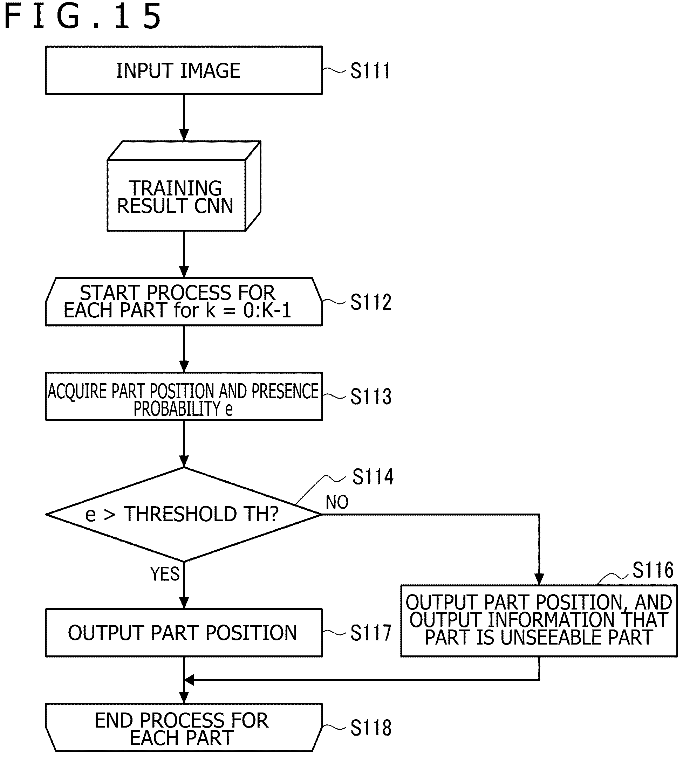

   FIG. 15 is a flowchart depicting an example of a procedure of a recognition step according to the first embodiment of the present disclosure.
[FIG. 16]

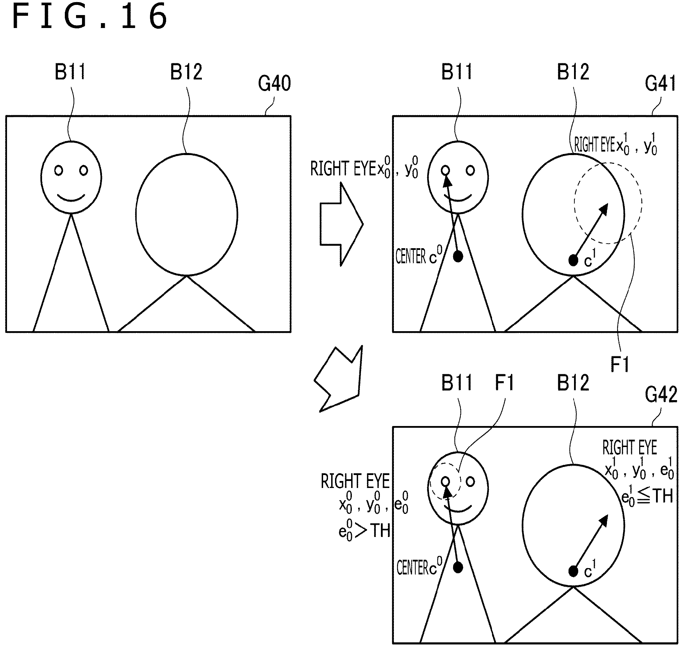

   FIG. 16 depicts figures for explaining an example in which presence probabilities are applied to autofocus.
[FIG. 17]

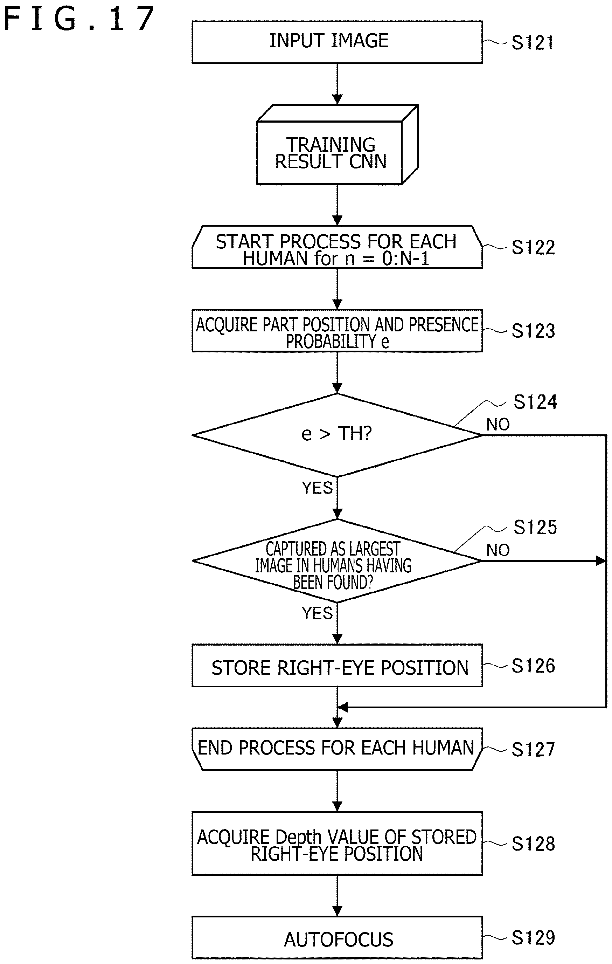

   FIG. 17 is a flowchart depicting an example of autofocus control.
[FIG. 18]

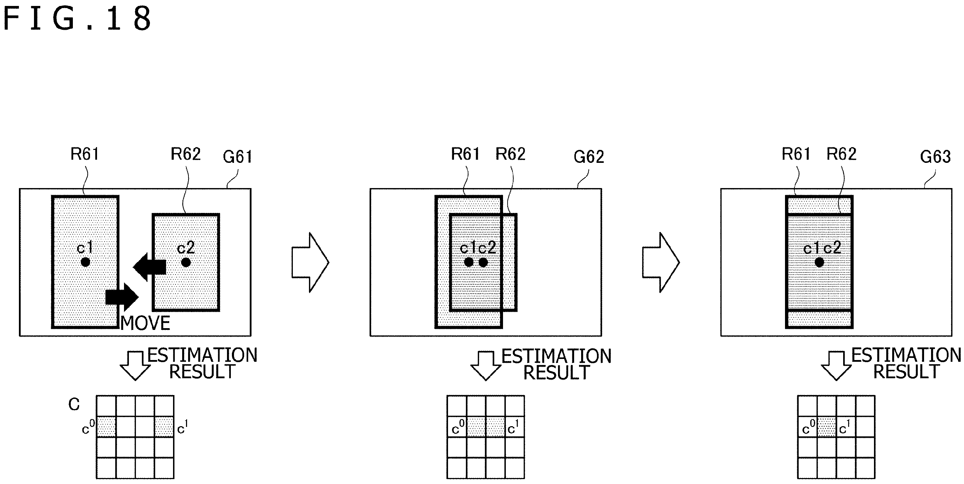

   FIG. 18 depicts figures for explaining an example in which center positions overlap.
[FIG. 19]

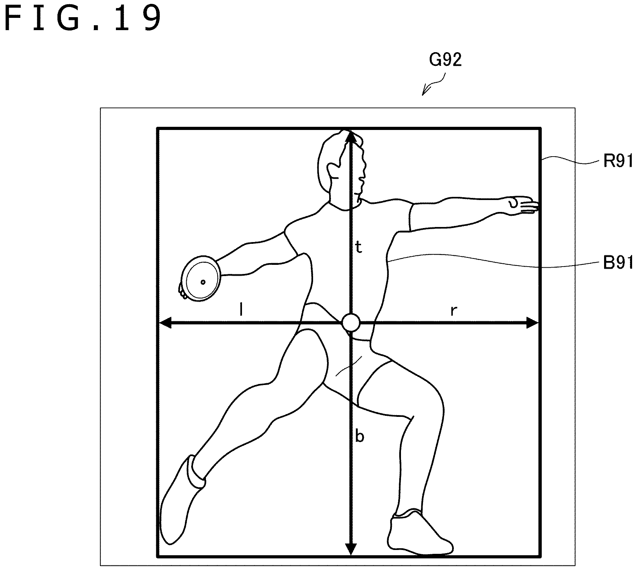

   FIG. 19 is a figure for explaining Disclosed Technology 2.
[FIG. 20]

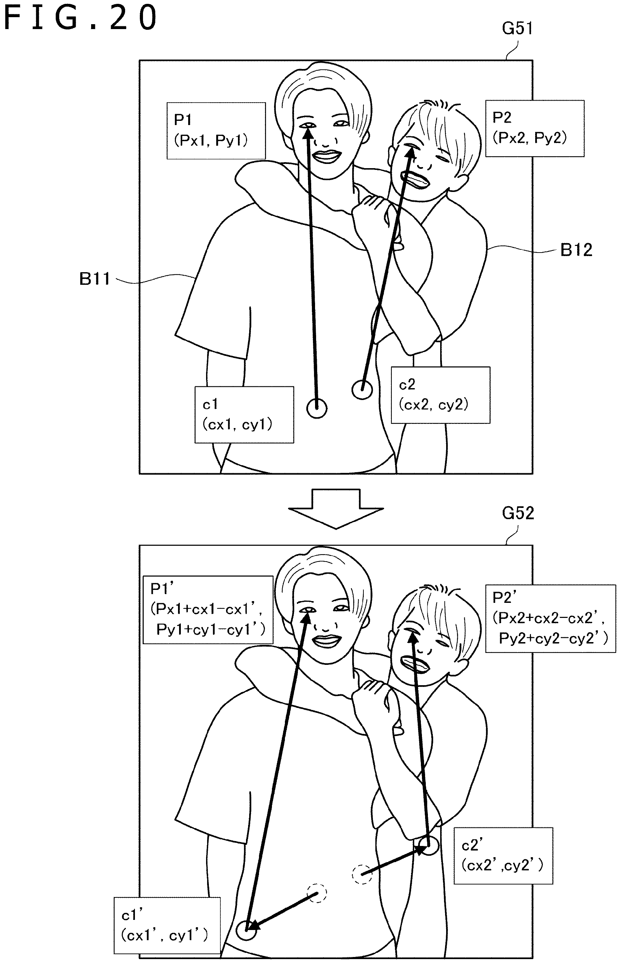

   FIG. 20 depicts figures for explaining functionalities of a CNN training section.
[FIG. 21]

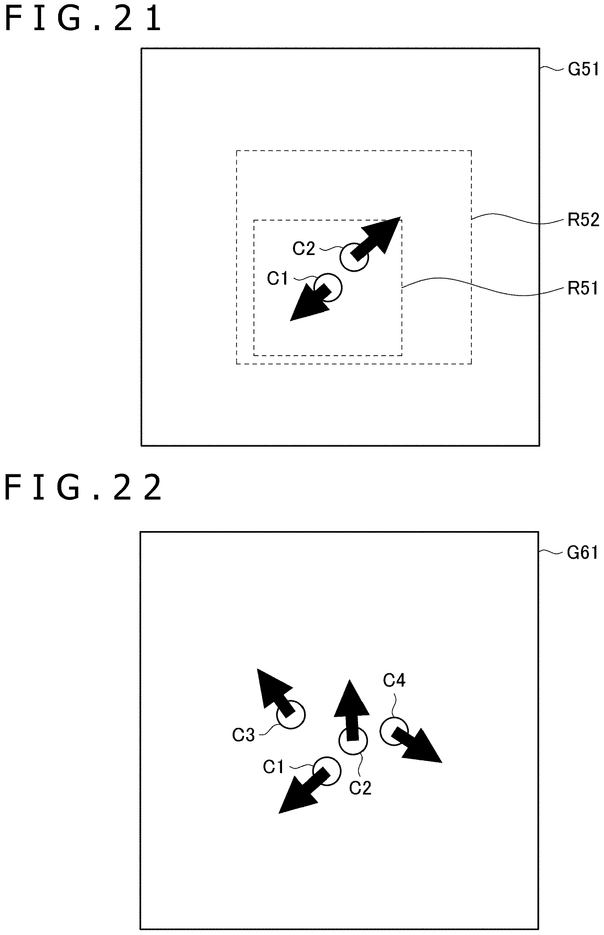

   FIG. 21 is a figure schematically depicting a process of moving two human-body center positions away from each other.
[FIG. 22]
   FIG. 22 is a figure schematically depicting a process of moving four human-body center positions away from each other.
[FIG. 23]

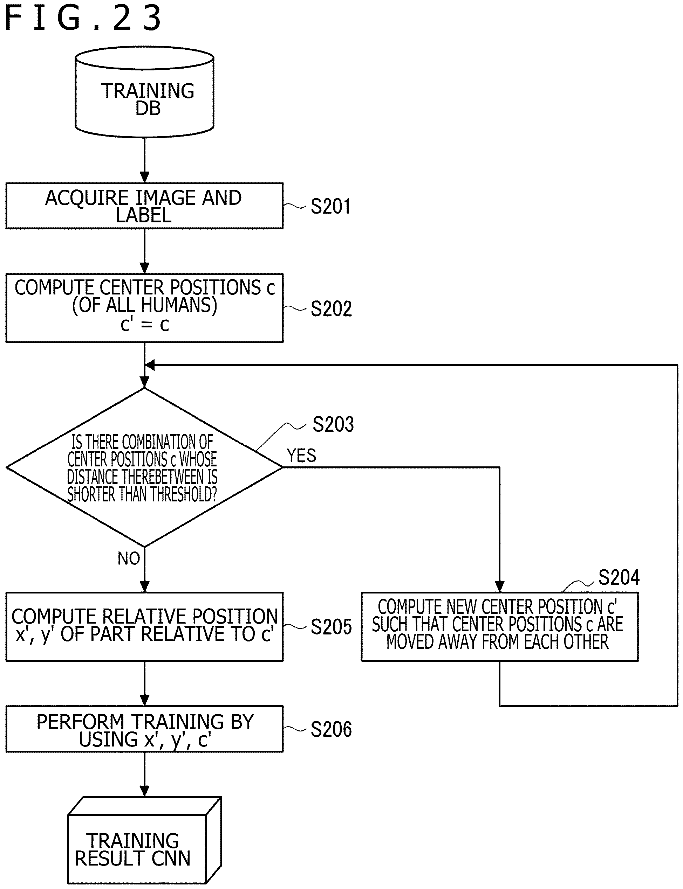

   FIG. 23 is a flowchart depicting an example of the procedure of a training step according to a second embodiment of the present disclosure.
[FIG. 24]

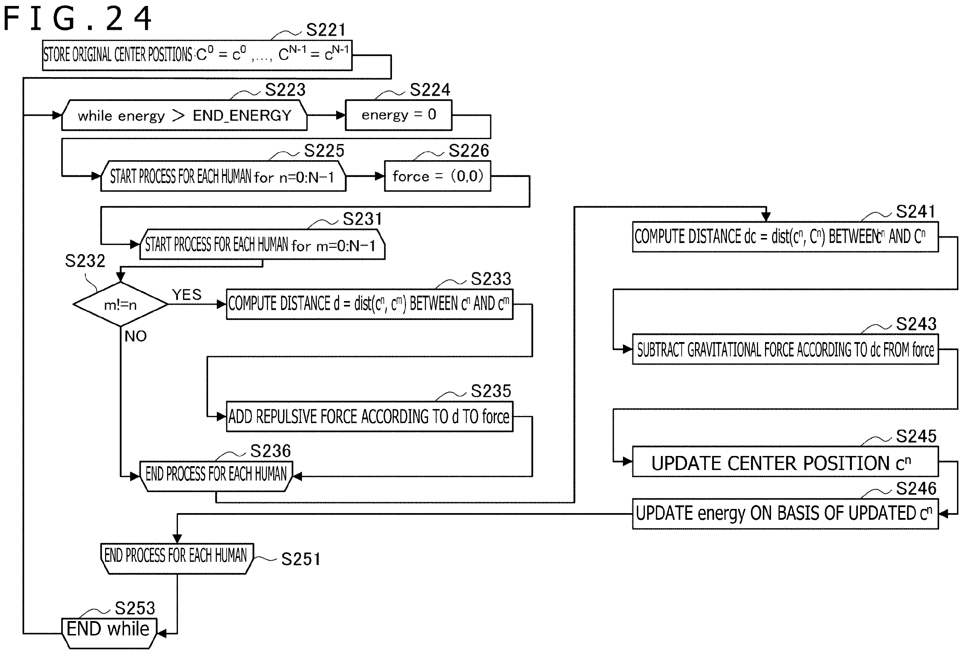

   FIG. 24 is a flowchart depicting a specific example of a process of moving a plurality of human-body center positions away from each other.
[FIG. 25]

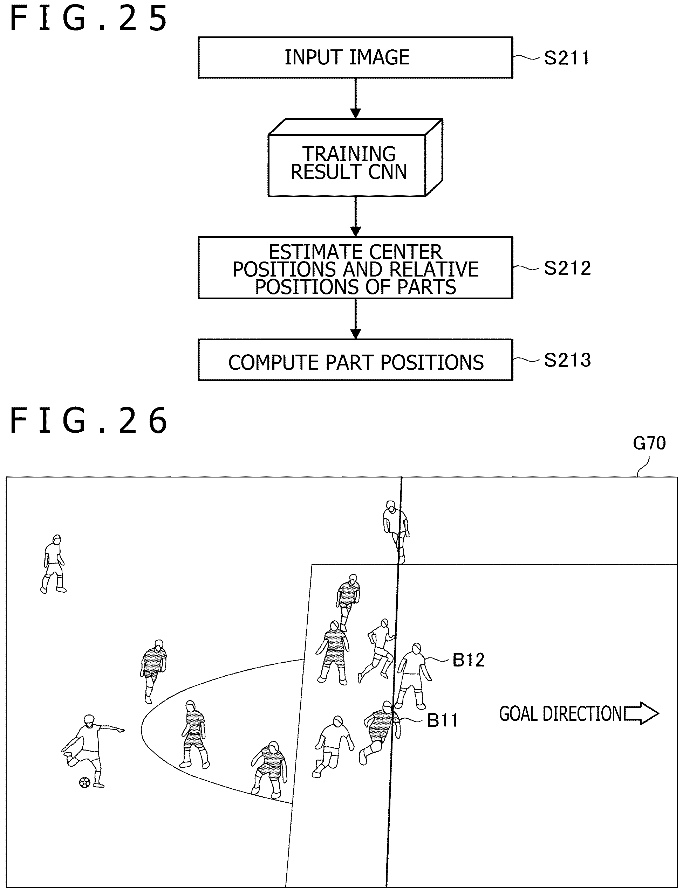

   FIG. 25 is a flowchart depicting an example of the procedure of a recognition step according to the second embodiment of the present disclosure.
[FIG. 26]
   FIG. 26 is a figure for explaining an example in which estimated part positions are applied to a sport scene.
[FIG. 27]

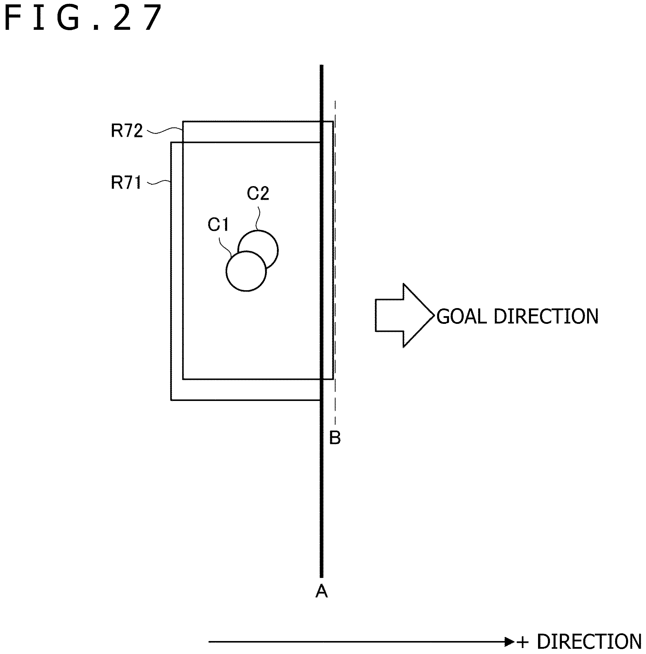

   FIG. 27 is a figure for explaining an offside line.
[FIG. 28]

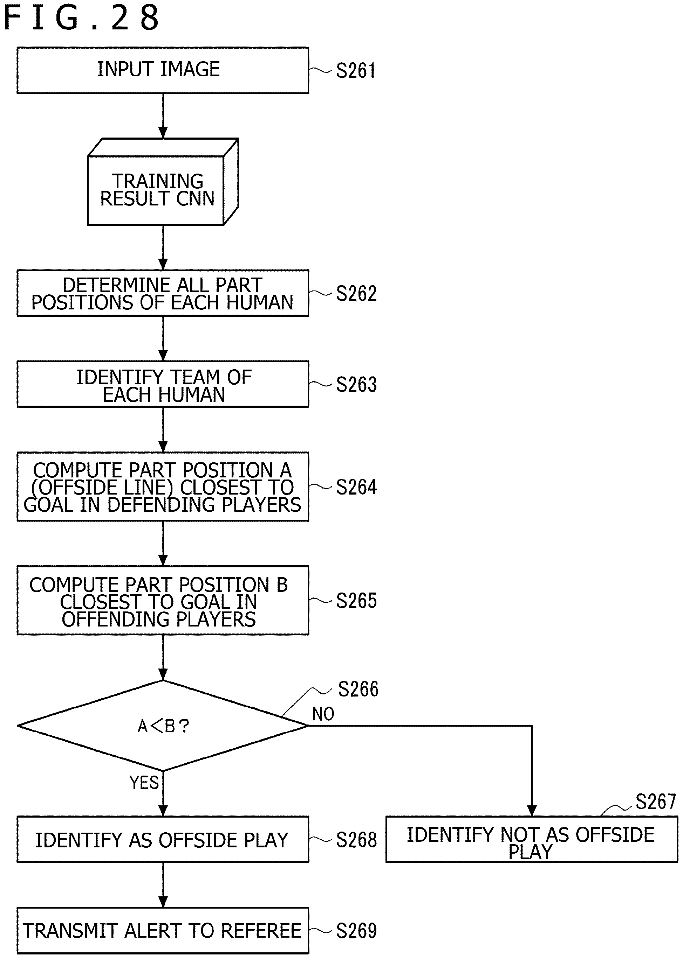

   FIG. 28 is a flowchart depicting an example in which estimated part positions are applied to offside identification.
[FIG. 29]

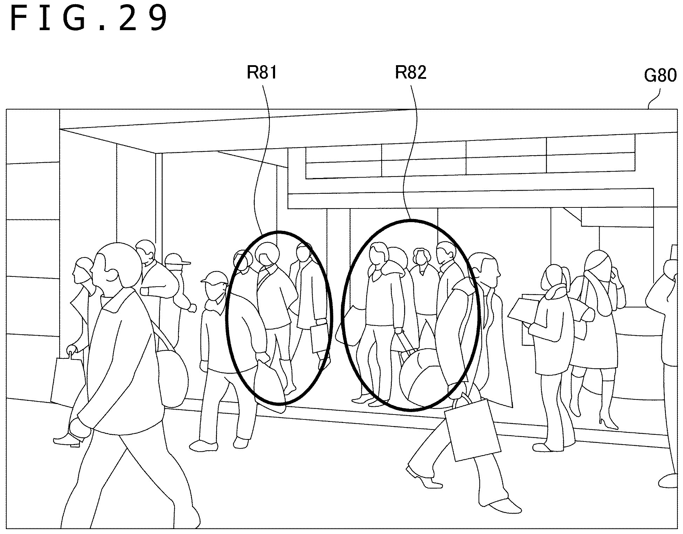

   FIG. 29 is a figure for explaining an example in which estimated part positions are applied to a street scene.
[FIG. 30]

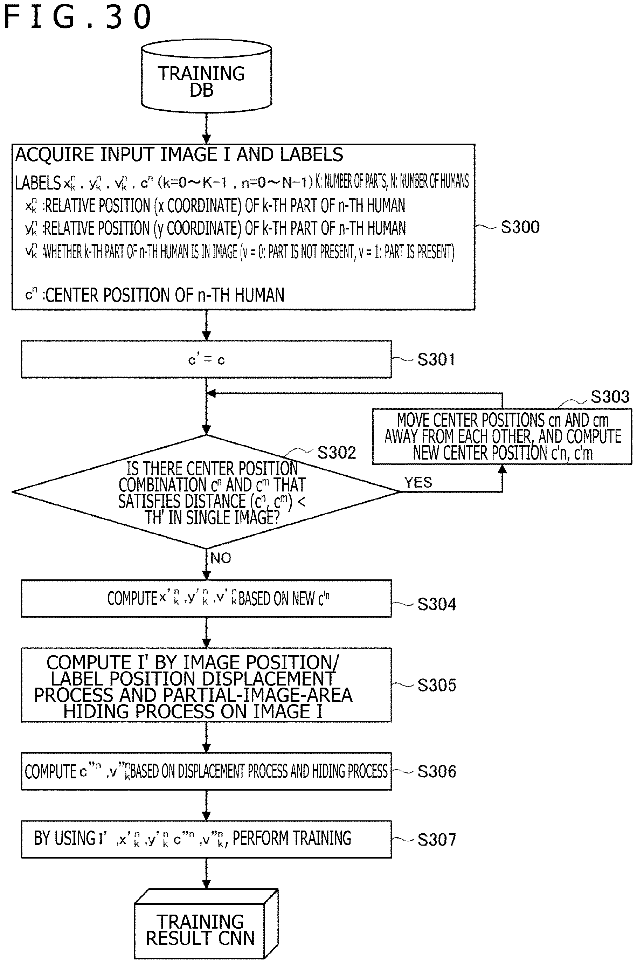

   FIG. 30 is a flowchart depicting an example of the procedure of a training step in a case where the first embodiment of the present disclosure and the second embodiment of the present disclosure are combined.
[FIG. 31]

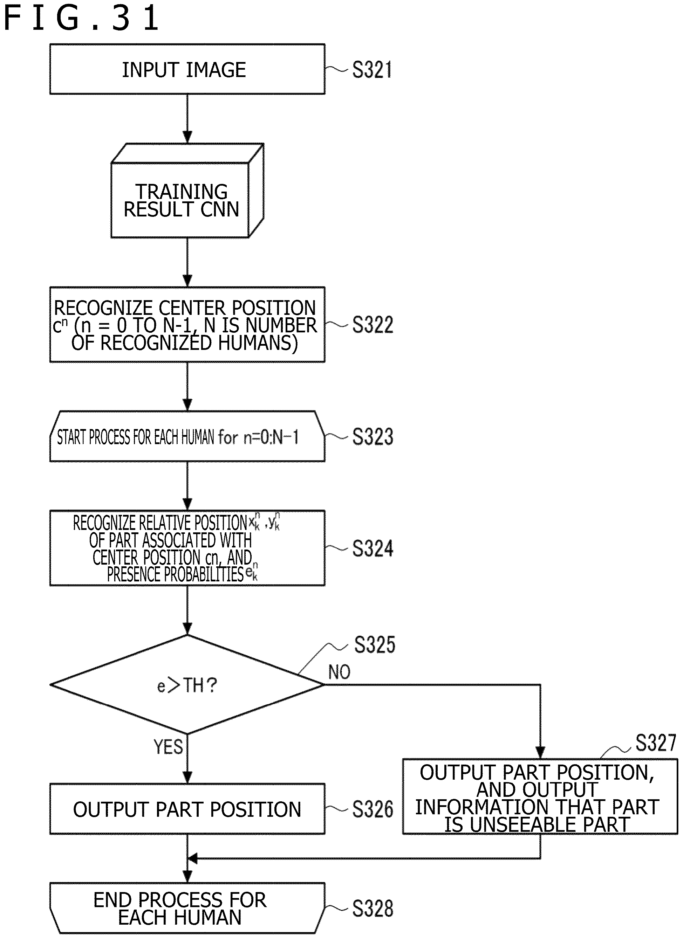

   FIG. 31 is a flowchart depicting an example of the procedure of a recognition step in a case where the first embodiment of the present disclosure and the second embodiment of the present disclosure are combined.
[FIG. 32]

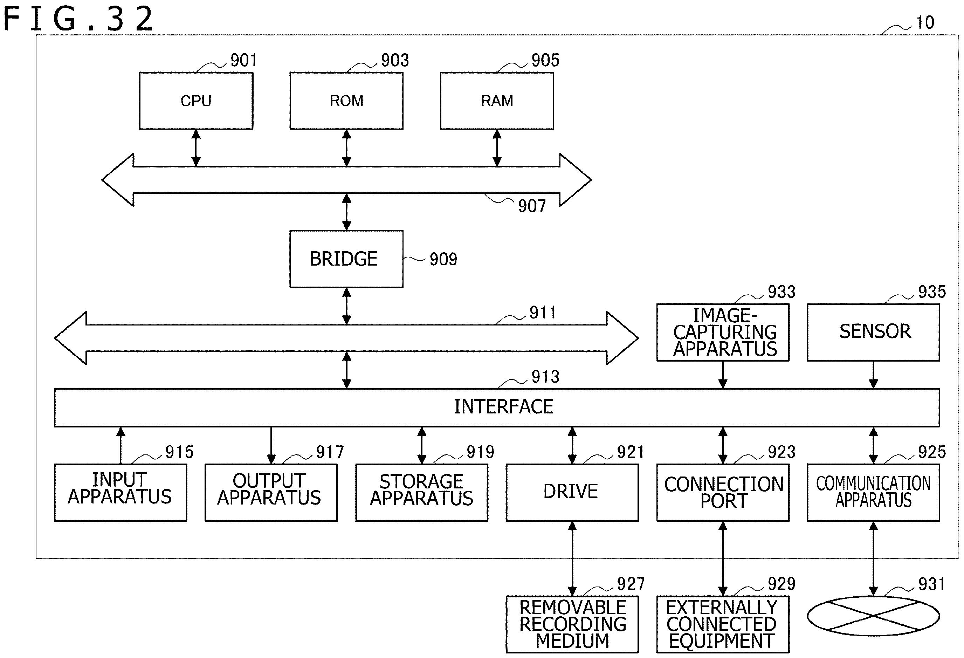

   FIG. 32 is a block diagram depicting a hardware configuration example of the information processing system according to the embodiments of the present disclosure.

### [Description of Embodiments]

Hereinbelow, preferred embodiments of the present disclosure are explained in detail with reference to the attached figures. Note that, in the present specification and the figures, constituent elements that are configured functionally substantially identically are given identical reference characters, and overlapping explanations are omitted thereby.

In addition, in the present specification and the figures, distinctions between a plurality of constituent elements that are configured functionally substantially identically or similarly are made by giving them different numerals after identical reference characters, in some cases. It should be noted that only identical reference characters are given in a case where it is not necessary to make particular distinctions between individual ones of a plurality of constituent elements that are configured functionally substantially identically or similarly. In addition, distinctions between similar constituent elements in different embodiments are made by giving them different alphabetical characters after identical reference characters, in some cases. It should be noted that only identical reference characters are given in a case where it is not necessary to make particular distinctions between individual ones of similar constituent elements.

Note that explanations are given in the following order.
0. Functional Configuration Example of Information Processing System
1. First Embodiment
   1.1. Background
   1.2. Overview
   1.3. Details of Training Step
   1.4. Details of Recognition Step
   1.5. Autofocus Control
   1.6. Advantageous Effects of First Embodiment
   1.7. Modification Example of First Embodiment
2. Second Embodiment
   2.1. Background
   2.2. Details of Training Step
   2.3. Details of Recognition Step
   2.4. Application Example
   2.5. Advantageous Effects of Second Embodiment
3. Combination of Embodiments
4. Hardware Configuration Example
5. Conclusion

### <0. Functional Configuration Example of Information Processing System>

First, a functional configuration example of an information processing system according to embodiments of the present disclosure is explained.

FIG. 1 is a figure depicting a functional configuration example of the information processing system according to the embodiments of the present disclosure. As depicted in FIG. 1, an information processing system 10 has a control section 110, a manipulation section 120, a sensor section 130, a storage section 140, a communication section 150, and a presenting section 160. The information processing system 10 can be realized by a computer. Note that the functional configuration example of the information processing system 10 depicted in FIG. 1 can be applied to each of a first embodiment of the present disclosure and a second embodiment of the present disclosure that are to be explained later.

The control section 110 executes control of each section of the information processing system 10. For example, the control section 110 may include one or more CPUs (Central Processing Units) or the like or may include one or more GPUs (Graphics Processing Units) or the like. In a case where the control section 110 includes processing units like CPUs, GPUs, or the like, the processing units may include electronic circuits. The control section 110 can be realized by a program being executed by the processing units.

The control section 110 has a CNN recognition processing section 112, a post-processing section 114, an output section 116, and a CNN training section 118. Details of these blocks are explained later.

The manipulation section 120 has a functionality of accepting input of manipulation by a user. It is mainly supposed in the embodiments of the present disclosure that the manipulation section 120 includes a mouse and a keyboard. However, the manipulation section 120 does not necessarily include a mouse and a keyboard. For example, the manipulation section 120 may include a touch panel, a touch pad, a switch, a lever, or a button. In addition, the manipulation section 120 may include a microphone that senses sounds of a user or may include an image sensor that senses the line of sight of a user.

Note that it is mainly supposed in the embodiments of the present disclosure that the manipulation section 120 is present in a machine including the control section 110. However, the manipulation section 120 may be present in another machine not including the control section 110. At this time, manipulation accepted by the manipulation section 120 may be provided to the control section 110 via a network.

The sensor section 130 includes an image sensor, and senses recognition image data by using the image sensor. Hereinbelow, image data is also referred to as "images" simply. Here, a type of the image sensor is not limited. Whereas it is mainly supposed in the embodiments of the present disclosure that the image sensor includes an RGB image sensor that senses RGB images, the image sensor may include a depth sensor that senses depth images or may include an IR sensor that senses IR (Infrared) images. The recognition images sensed by the sensor section 130 are provided to the control section 110, and used for a recognition process by using a trained model.

Note that it is mainly supposed in the embodiments of the present disclosure that the sensor section 130 is present in the machine including the control section 110. However, the sensor section 130 may be present in another machine not including the control section 110. At this time, images sensed by the sensor section 130 may be provided to the control section 110 via a network.

In addition, a type of a model is not limited particularly. It is mainly supposed in the embodiments of the present disclosure that a neural network is used as the model. Furthermore, it is mainly supposed in the embodiments of the present disclosure that a CNN is used as the model. At this time, training of the CNN is performed by updating weights of a plurality of neurons included in the CNN by a training process. However, a type of the neural network is not limited to a CNN. Hereinbelow, the trained CNN is also referred to as a "training result CNN."

The storage section 140 is a recording medium that includes a memory, and stores thereon programs to be executed by the control section 110, stores thereon data necessary for program execution, and so on. For example, the storage section 140 stores thereon a training database (hereinbelow, also referred to as a "training DB") and the training result CNN. In addition, the storage section 140 temporarily stores thereon data for calculation by the control section 110. The storage section 140 includes a magnetic storage section device, a semiconductor storage device, an optical storage device, a magneto-optical storage device, or the like.

The communication section 150 includes a communication circuit, and has a functionality of communicating with another networkconnected apparatus via a network.

The presenting section 160 has a functionality of outputting information to a user. A type of the presenting section 160 is not limited. For example, the presenting section 160 may include a display that can display information in a format that can be visually recognized by a user, and the display may be a liquid crystal display, an organic EL (Electro-Luminescence) display, or another display. Alternatively, the presenting section 160 may include a tactile presenting apparatus that presents tactile information to a user or may include a speaker that presents information to a user by sounds.

For example, the CNN training section 118 and the training DB are included in a training apparatus, and the CNN recognition processing section 112, the post-processing section 114, and the output section 116 are included in a reasoning apparatus. Whereas it is supposed in the embodiments of the present disclosure that the training apparatus and the reasoning apparatus are realized by a single computer, the training apparatus and the reasoning apparatus may be realized by separate computers. At this time, the training result CNN may be transmitted from the training apparatus, and received by the communication section 150 of the reasoning apparatus.

A functional configuration example of the information processing system 10 according to the embodiments of the present disclosure has been explained thus far.

### <1. First Embodiment>

Next, the first embodiment of the present disclosure is explained.

### [1.1. Background]

In recent years, there have been known technologies for estimating the position of a subject captured in an image. For example, in a technology having been disclosed (hereinbelow, also referred to as "Disclosed Technology 1"), a heat map representing a value of the center of a subject is introduced to a training process. According to Disclosed Technology 1, the center position of a subject captured in an image is estimated on the basis of results of a training process and the image. In addition, according to Disclosed Technology 1, relative positions of predetermined areas of a subject relative to the center position of the subject are estimated on the basis of regression from the center position of the subject.

Hereinbelow, human bodies are taken and explained as an example of subjects captured in images. However, subjects captured in images are not limited to human bodies. For example, subjects captured in images may be rigid bodies (e.g. vehicles, furniture, etc.) or may be non-rigid bodies (e.g. animals, plants, etc.). In addition, in the following explanation, parts (body parts) of human bodies are taken and explained as an example of predetermined areas of subjects. Examples of parts of human bodies include eyes, necks, shoulders, elbows, wrists, and the like. However, predetermined areas of subjects are not limited, and can be any areas as long as they are partial areas of the subjects.

Disclosed Technology 1 is explained with reference to FIG. 2 to FIG. 6. FIG. 2 is a figure depicting an example of positions estimated by Disclosed Technology 1. As depicted in FIG. 2, in Disclosed Technology 1, the CNN outputs a heat map (hereinbelow, also referred to as a "human-body-center heat map") representing a value of the center of a human body on the basis of a recognition image being input to the CNN, and a human-body center position C is estimated on the basis of the human-body-center heat map. Furthermore, relative positions Pk of parts relative to the human-body center position C are estimated on the basis of regression from the human-body center position C. In addition, part positions are estimated on the basis of a heat map (hereinbelow, also referred to as a "part position heat map") representing values of the part positions.

FIG. 3 is a figure depicting an example of a human-body-center heat map. As depicted in FIG. 3, according to Disclosed Technology 1, the CNN outputs a human-body-center heat map G91 on the basis of a recognition image being input to the CNN. According to Disclosed Technology 1, the human-body center position C is estimated on the basis of the human-body-center heat map G91. More specifically, according to Disclosed Technology 1, a point that has a value which is equal to or greater than values of the eight surrounding points in points on the human-body-center heat map G91 is estimated as the human-body center position C.

FIG. 4 is a figure depicting an example of relative positions of parts relative to the human-body center position C. As depicted in FIG. 4, according to Disclosed Technology 1, relative positions of parts (the eyes, the wrists, the feet, and the like in the example depicted in FIG. 4) relative to the human-body center position C are estimated on the basis of regression from the human-body center position C. FIG. 5 is a figure depicting an example of part positions estimated from the part position heat map. According to Disclosed Technology 1, part positions (part positions H1 to H5 (the eyes, the right wrist, the left wrist, the right ankle, the left ankle, etc.) in the example depicted in FIG. 5) are estimated on the basis of the heat map representing values of the part positions.

For example, supposing that the number of humans captured in an image is N, the center position of each human body can be expressed as cⁿ by using n (n = 0 to N-1). In addition, supposing that the number of parts is P, a relative position of a part k relative to the human-body center position cⁿ can be expressed as xⁿₖ by using k (k = 0 to K-1) .

FIG. 6 is a figure depicting an example of records of human-body center positions and relative positions of parts. As depicted in FIG. 6, a relative position x⁰₀, y⁰₀ of a part (k = 0) relative to a human-body center position c⁰ is recorded at a position corresponding to a position where the human-body center position c° is recorded, and a relative position x¹₀, y¹₀ of a part (k = 1) relative to a human-body center position c¹ is recorded at a position corresponding to a position where the human-body center position c¹ is recorded.

In other words, the position where the human-body center position c° is recorded is searched for, and, if the position where the human-body center position c° is recorded is found, the relative position x⁰₀, y⁰₀ of the part (k = 0) associated with the human-body center position c⁰ is read out from the position corresponding to the position where the human-body center position c⁰ is recorded. Similarly, the position where the human-body center position c¹ is recorded is searched for, and, if the position where the human-body center position c¹ is recorded is found, the relative position x¹₀, y¹₀ of the part (k = 1) associated with the human-body center position c¹ is read out from the position corresponding to the position where the human-body center position c¹ is recorded.

Disclosed Technology 1 has been explained briefly thus far. Here, it is not always the case that parts of a human body are captured in an image necessarily. For example, when the back side of a human faces an image sensor, parts on a front side (e.g. a face, etc.) are not captured in an image. Alternatively, when parts of a human are hidden by an obstacle or the like when seen from an image sensor, the hidden parts are not captured in an image. Alternatively, in a case where an image of a human not having some parts of her/his body is captured (e.g. in a case where an image of a human with a physical disability is captured or in other similar cases), those parts are not captured in an image.

In spite of this, according to Disclosed Technology 1, relative positions (x, y) of parts relative to the human-body center position c are estimated necessarily as part positions. However, according to Disclosed Technology 1, information representing whether a part is present in an image (hereinbelow, also referred to as "presence/absence information") cannot be obtained. Then, the fact that part presence/absence information cannot be obtained can cause various inconveniences. For example, AF (autofocus) is performed undesirably on the basis of an estimated part position of an absent part despite the absence of the part in an image, in some possible cases. Alternatively, a depth value of an estimated part position of an absent part might be used undesirably despite the absence of the part in an image, in some possible cases.

Alternatively, in order to determine whether or not a part is present in an image, one may consider using information as to whether or not the part position of the part can be estimated from a part position heat map. However, it is not always the case that part positions can be precisely estimated necessarily on the basis of a part position heat map. For example, in a case where a right foot is hidden by an obstacle, and a left foot is present in an image, the position of the left foot may be estimated as the position of the right foot undesirably on the basis of a part position heat map since the left and right feet resemble each other. Accordingly, it cannot be determined precisely whether or not a part is present in an image.

In view of this, the first embodiment of the present disclosure mainly proposes a technology that enables estimation of part positions of human bodies and estimation of the possibilities that the parts are captured in an image.

The background of the first embodiment of the present disclosure has been explained thus far.

### [1.2. Overview]

Next, an overview of the information processing system 10 according to the first embodiment of the present disclosure is explained with reference to FIG. 7. FIG. 7 is a figure for explaining an overview of the information processing system 10 according to the first embodiment of the present disclosure. As depicted in FIG. 7, in the first embodiment of the present disclosure also, the CNN outputs human-body center positions C and relative positions Pk of parts relative to the human-body center positions C on the basis of a recognition image being input to the CNN.

Note that the human-body center positions C represent an example of human-body "reference positions." Accordingly, any positions of human bodies may be treated as the human-body center positions C. In addition, in the first embodiment of the present disclosure, information (hereinbelow, also referred to as a "presence probability") eₙ representing the possibility of presence of parts in an image is output on the basis of the recognition image being input to the CNN. A presence probability eₙ is output for each set of K parts corresponding to n humans.

Note that it is mainly supposed in the first embodiment of the present disclosure that part positions input to the CNN and part positions output from the CNN are separate as the human-body center positions C and the relative positions Pk of the parts. However, as explained later also, part positions input to the CNN and part positions output from the CNN may not be separate as the human-body center positions C and the relative positions Pk of the parts. That is, the absolute positions of the parts may be directly input to the CNN, and the absolute positions of the parts may be directly output from the CNN.

An overview of the first embodiment of the present disclosure has been explained thus far.

### [1.3. Details of Training Step]

Next, details of a training step executed by the information processing system 10 according to the first embodiment of the present disclosure are explained with reference to FIG. 8 to FIG. 12.

### (Training DB)

Input images and labels are stored on a training DB in association with each other. The input images and the labels represent training data used for a training process. As the labels, human-body center positions Cⁿ (n = 0 to N-1, where N is the number of humans) captured in the input images, relative positions (xⁿₖ, yⁿₖ) of parts k (k = 0 to K-1, where K is the number of parts) relative to the human-body center positions Cₙ, and presence/absence information vⁿₖ regarding the parts k are associated with each other.

Hereinbelow, it is mainly supposed that the value representing that a part is absent in an input image is 0, and the value representing that a part is present in an input image is 1. However, the value representing that a part is absent in an input image is not limited to 0, and the value representing that a part is present in an input image is not limited to 1. Note that it is not always the case that labels (relative positions) of all parts are stored on the training DB. For example, in a case where the part of a foot of a human captured in an input image is hidden by an obstacle, the label (relative position) of the part of the foot of the human does not exist.

### (CNN Training Section 118)

The CNN training section 118 acquires input images (first image data) and labels from the training DB at the training step.

FIG. 8 is a figure depicting an example of an input image. As can be seen by referring to FIG. 8, an input image G10 is depicted. As examples of subjects, a human body B11 (first subject) and a human body B12 are captured in the input image G10. At this time, the CNN training section 118 acquires labels corresponding to the human body B11 as labels corresponding to the input image G10. Whereas the right eye is taken and explained as an example of a part here, parts other than the right eye may be used. Note that since the right eye of the human body B12 is not captured in the input image G10, a label of a part k = 0 (right eye) corresponding to the human body B12 is not acquired from the training DB.

More specifically, as labels corresponding to the human body B11, the CNN training section 118 acquires a center position C⁰ of the human body B11, a relative position (x⁰₀, y⁰₀) of the part k = 0 (right eye) relative to the human-body center position C°, and presence/absence information v⁰₀ = 1 (present) regarding the part k = 0 (right eye). On the other hand, since labels corresponding to the human body B12 do not exist, as a label corresponding to the human body B12, the CNN training section 118 sets presence/absence information v¹₀ = 0 (absent) regarding the part k = 0 (right eye). Hereinbelow, the labels corresponding to the human body B11 are explained mainly.

Next, the CNN training section 118 implements a predetermined process (hereinbelow, also referred to as "processing") on the input image G10. Since it becomes possible thereby to intentionally create a situation where the position of the part is absent in the input image G10, improvement of the recognition precision about the image in which the part is absent can be expected. It is mainly supposed here that the CNN training section 118 randomly implements the processing on the input image G10. However, as explained later also, the CNN training section 118 may implement the processing (e.g. may implement identical processing) on the input image G10 on the basis of a predetermined rule. Alternatively, the CNN training section 118 may not implement the processing on the input image G10.

The CNN training section 118 implements the processing on the input image G10 and obtains part presence/absence information by identifying whether or not the part is present in an image (third image data) obtained after the processing has been implemented. In a case where the part is present in the image obtained after the processing has been implemented, the CNN training section 118 leaves unchanged the part presence/absence information, which is 1 (present). On the other hand, in a case where the part is present in the image obtained after the processing has been implemented, the CNN training section 118 changes the part presence/absence information to 0 (absent).

Before the processing and the presence/absence information change are performed on the input image G10, an image (training image) to be used for training can be generated on the basis of the input image G10. FIG. 9 is a figure depicting an example of the training image. As can be seen by referring to FIG. 9, a training image G20 is depicted. The CNN training section 118 generates the training image G20 by arranging the input image G10 within the frame of the training image G20. Note that the center position C⁰ of the human body B11, the relative position (x⁰₀, y⁰₀) of the right-eye part, and the right-eye part presence/absence information v°o = 1 (present) are depicted as labels corresponding to the human body B11.

FIG. 10 is a figure depicting a first example of the processing and the presence/absence information updating. As can be seen by referring to FIG. 10, the input image G10 has been moved (as compared with the input image G10 depicted in FIG. 9). That is, the processing may include a process of moving each piece of pixel data included in the input image G10 (hereinbelow, also referred to as a "displacement process"). Note that the displacement process not only can include such a translation of the input image G10, but also can include an affine transformation process such as up-scaling, down-scaling or rotation on the input image G10. At this time, the CNN training section 118 changes the center position of the human body B11 and the center position of the human body B12 included in the labels according to the movement (e.g. according to the moving direction and moving distance) of the input image G10.

FIG. 10 depicts a moved center position C'⁰ of the human body B11, as an example. It is supposed here that the displacement process on the input image G10 is performed randomly. More specifically, it is supposed that the moving direction and moving distance of the input image G10 are decided randomly. However, the moving direction and moving distance of the input image G10 may be decided on the basis of a predetermined rule. Note that a technology of randomly performing a displacement process on the input image G10 is generally known as augmentation. The training image G20 obtained after the displacement process on the input image G10 can be used for training to be explained later.

Then, the CNN training section 118 identifies whether or not the right-eye part of the human body B11 is present in the training image G20 obtained after the displacement process on the input image G10. In the example depicted in FIG. 10, the right-eye part of the human body B11 is absent in the training image G20 obtained after the displacement process. In view of this, the CNN training section 118 changes the right-eye part presence/absence information v⁰₀ = 1 (present) regarding the human body B11 to v'⁰₀0 (absent). Note that since the right-eye part of the human body B12 is present in the training image G20 obtained after the displacement process in the example depicted in FIG. 10, the CNN training section 118 may leave unchanged the right-eye part presence/absence information regarding the human body B12, which is 1 (present).

FIG. 11 is a figure depicting a second example of the processing and the presence/absence information updating. As can be seen by referring to FIG. 11, a partial area of the input image G10 is replaced with a predetermined image (a rectangular image G12 with uniformly-colored pixels in the example depicted in FIG. 11). That is, the processing may include a process of replacing a partial area of the input image G10 with a predetermined image, and hiding the partial area (hereinbelow, also referred to as a "hiding process").

It is supposed here that the hiding process on the input image G10 is performed randomly. More specifically, it is supposed that the color of the rectangular image G12 is decided randomly. However, a color of the rectangular image G12 may be decided on the basis of a predetermined rule (e.g. may be a fixed color (e.g. gray, etc.)).

In addition, it is supposed that a position of the rectangular image G12 also is decided randomly. However, a position of the rectangular image G12 may be decided on the basis of a predetermined rule. For example, a part position is known from the human-body center position C⁰ and the relative position (x⁰₀, y⁰₀) relative to the center position C⁰. Accordingly, an image of an area including the part position may be replaced with the rectangular image G12. Since the part is hidden intentionally thereby, it is expected that robust recognition becomes possible even when parts are hidden.

Note that a technology of performing a hiding process randomly on the input image G10 is generally known as random erasing (RandomErasing). The training image G20 obtained after the hiding process on the input image G10 can be used for training to be explained later.

Then, the CNN training section 118 identifies whether or not the right-eye part of the human body B11 is present in the training image G20 obtained after the hiding process on the input image G10. In the example depicted in FIG. 11, the right-eye part of the human body B11 is absent in the training image G20 obtained after the hiding process. In view of this, the CNN training section 118 changes the right-eye part presence/absence information v⁰₀ = 1 (present) regarding the human body B11 to v'⁰₀ = 0 (absent). Note that since the right-eye part of the human body B12 is present in the training image G20 obtained after the hiding process in the example depicted in FIG. 11, the CNN training section 118 may leave unchanged the right-eye part presence/absence information regarding the human body B12, which is 1 (present).

Note that FIG. 11 depicts a case where a partial area of the input image G10 is replaced with the rectangular image G12 with uniformly-colored pixels. However, the image with which the partial area of the input image G10 is replaced is not limited to the rectangular image G12. For example, the partial area of the input image G10 may be replaced with an image of a human body. Thereby, it is expected that robust recognition becomes possible even when humans overlap each other.

It is mainly supposed hereinbelow that both the displacement process and the hiding process are implemented on the input image G10 as examples of the processing. However, only one of the displacement process and the hiding process may be implemented on the input image G10. The CNN training section 118 performs the training process on the basis of an image obtained after the processing has been implemented and changed labels. Here, the specific method of the training process is not limited.

For example, the CNN training section 118 calculates an error between each of a human-body center position Cₙ, a relative position (xⁿₖ, yⁿₖ) of a part k relative to the human-body center position Cₙ, and presence/absence information vⁿₖ regarding the part k output from the CNN on the basis of an image obtained after the processing has been implemented being input to the CNN, and a corresponding label, and causes a weighted sum of the calculated errors to backwardly propagate (back propagation) (by using the error backpropagation) to thereby update weights of the CNN. For example, Stochastic gradient descent (SGD) may be used as the weight updating technique. However, the weight updating technique is not limited to SGD.

After the weight updating is ended, the weight updating based on an image and labels newly acquired from the training DB is performed. Then, after the weight updating is performed a predetermined number of times, the training process is ended. Here, the predetermined number of times is not limited. For example, the predetermined number of times may be decided in units of epochs (the number of times a single input image has been used repeatedly for the training process) or may be decided in units of iterations (the number of times input images have been updated). Alternatively, the training process may be ended in a case where a weighted sum of errors has become equal to or smaller than a predetermined value.

### (Procedure of Training Step)

Next, an example of the procedure of the training step according to the first embodiment of the present disclosure is explained with reference to FIG. 12. FIG. 12 is a flowchart depicting an example of the procedure of the training step according to the first embodiment of the present disclosure. Note that the flowchart depicted in FIG. 12 merely depicts an example of the procedure of the training step according to the first embodiment of the present disclosure. Accordingly, the procedure of the training step according to the first embodiment of the present disclosure is not limited to the example depicted in the flowchart in FIG. 12. It is supposed here that there is one image, and there is one human captured in the image, for simplification and convenience of explanation.

As depicted in FIG. 12, the CNN training section 118 acquires the image and labels from the training DB. Then, the CNN training section 118 starts a repetitive process for each part (k = 0 to K-1) (S101). The CNN training section 118 executes, as examples of the processing on an image, an image position/label position displacement process, and a partial-image-area hiding process (S102). Note that, as described above, in a case where the processing on the image is not executed, and the operation transitions to S104 without execution of S102. In a case where a subject part is an unlabeled part ("YES" at S104), the CNN training section 118 causes the operation to transition to S103. On the other hand, in a case where the subject part is a labeled part ("NO" at S104), the CNN training section 118 causes the operation to transition to S105.

After the operation transitions to S105, the CNN training section 118 identifies whether or not the part position is present in the image obtained after the processing has been implemented (S105). In a case where the part position is absent in the image obtained after the processing has been implemented ("NO" at S105), the CNN training section 118 causes the operation to transition to S103. On the other hand, in a case where the part position is present in the image obtained after the processing has been implemented ("YES" at S105), the CNN training section 118 causes the operation to transition to S106.

After the operation transitions to S103, the CNN training section 118 sets part presence/absence information v to 0 (S103), and proceeds to the termination (S107) of the repetitive process for each part. On the other hand, after the operation transitions to S106, the CNN training section 118 sets the part presence/absence information v to 1 (S106), and proceeds to the termination (S107) of the repetitive process for each part.

After the operation transitions to S107, in a case where the repetitive process for each part has not been executed K times, the CNN training section 118 returns to the start point (S101) of the repetitive process for each part. On the other hand, in a case where the repetitive process for each part has been executed K times, the CNN training section 118 performs the training process on the basis of the image obtained after the processing has been implemented and changed labels (S108). The training process generates a training result CNN, which is then stored on the storage section 140.

Details of the training step executed by the information processing system 10 according to the first embodiment of the present disclosure have been explained thus far.

### [1.4. Details of Recognition Step]

Next, details of a recognition step executed by the information processing system 10 according to the first embodiment of the present disclosure are explained with reference to FIG. 13 to FIG. 15.

### (CNN Recognition Processing Section 112)

The CNN recognition processing section 112 functions as an acquiring section that acquires a recognition image (second image data) and the training result CNN at the recognition step.

It is mainly supposed here in the first embodiment of the present disclosure that the CNN recognition processing section 112 acquires, as the recognition image, an image sensed by the sensor section 130. However, the CNN recognition processing section 112 may acquire the recognition image from another location. For example, the CNN recognition processing section 112 may acquire a recognition image stored in advance on the storage section 140 or may acquire a recognition image received from another apparatus by using the communication section 150.

In addition, the training result CNN can be acquired from the storage section 140. However, as described above, in a case where the training apparatus and the reasoning apparatus are realized by separate computers or in other similar cases, the acquired training result CNN may be a training result CNN transmitted from the training apparatus, and received by the communication section 150 of the reasoning apparatus.

Furthermore, the CNN recognition processing section 112 performs the recognition process on the basis of the recognition image and the training result CNN. More specifically, the CNN recognition processing section 112 functions as a reasoning section that obtains the center positions Cⁿ of human bodies (second subjects) captured in the recognition image, relative positions (xⁿₖ, yⁿₖ) of parts k relative to the center positions Cⁿ and presence/absence information eⁿₖ regarding the presence probabilities of the parts k in the recognition image. Here, the specific method of the recognition process is not limited.

For example, the CNN recognition processing section 112 acquires the human-body center positions Cⁿ, the relative positions (xⁿₖ, yⁿₖ) of the parts k relative to the human-body center positions Cₙ, and the presence probabilities eⁿₖ of the parts k output from the training result CNN on the basis of the recognition image being input to the training result CNN.

Here, the presence/absence information vⁿₖ input to in the CNN at the training step is expressed by two values, 0 (absent) and 1 (present), as described above. On the other hand, the presence probabilities eⁿₖ obtained at the recognition step are information output from the training result CNN corresponding to the presence/absence information vⁿₖ, and can each assume a value of 0 to 1. The larger the numerical value of a presence probability eⁿₖ is, the higher the possibility of the presence of the part k in the recognition image.

### (Post-Processing Section 114)

The post-processing section 114 computes each part position corresponding to a combination of a human body n and a part k on the basis of the human-body center position Cⁿ and the relative position (xⁿₖ, yⁿₖ) of the part k relative to the human-body center position Cₙ. More specifically, regarding each combination of a human body n and a part k, the post-processing section 114 computes a part position corresponding to the combination of the human body n and the part k by adding together the human-body center position C and the relative position (x, y) of the part relative to the human-body center position C.

In addition, the post-processing section 114 compares the presence probability eⁿₖ of the part k and a predetermined threshold TH. Then, the post-processing section 114 outputs a result of the comparison between the presence probability eⁿₖ of the part k and the threshold TH to the output section 116. In a case where the presence probability eⁿₖ of the part k is higher than the threshold TH, the post-processing section 114 outputs, to the output section 116, information that the presence probability eⁿₖ of the part k is higher than the threshold TH. On the other hand, in a case where the presence probability eⁿₖ of the part k is equal to or lower than the threshold TH, the post-processing section 114 outputs, to the output section 116, information that the presence probability eⁿₖ of the part k is equal to or lower than the threshold TH.

Note that the threshold TH may be a predetermined unchangeable value or may be a predetermined, but changeable value. For example, in a case where a manipulation object (e.g. a slider, etc.) for changing the threshold is presented by the presenting section 160, the post-processing section 114 may change the threshold TH on the basis of threshold changing manipulation by a user on a manipulation object accepted by the manipulation section 120.

### (Output Section 116)

The output section 116 performs control according to the presence probabilities eⁿₖ of the parts k. For example, the output section 116 may control presentation by the presenting section 160 of information according to the presence probabilities eⁿₖ of the parts k. It can be supposed that the information according to the presence probabilities eⁿₖ of the parts k includes various types of information. For example, the output section 116 may control presentation by the presenting section 160 of information according to results of comparison between the presence probabilities eⁿₖ of the parts k and the threshold TH.

For example, in a case where the presence probability eⁿₖ of a part k is higher than the threshold TH, the output section 116 may control presentation by the presenting section 160 of the position of the part k. On the other hand, in a case where the presence probability eⁿₖ of a part k is equal to or lower than the threshold TH, the output section 116 may control presentation by the presenting section 160 of the position of the part k, and control presentation by the presenting section 160 of information that the part k is an unseeable part (i.e. that the probability of presence of the part k in the recognition image is lower than the threshold TH).

FIG. 13 is a figure for explaining an example of information according to results of comparison between presence probabilities eⁿₖ of parts k and the threshold TH. As can be seen by referring to FIG. 13, a recognition image G30 is displayed by the presenting section 160. A human body B11 and a human body B12 are captured in the recognition image G30. Then, each part position of each of the human body B11 and the human body B12 is displayed (circular marks in FIG. 13). For example, the position of a part A1 (left eye) of the human body B12 and the position of a part A2 (right eye) of the human body B12 are displayed by the presenting section 160.

Then, as can be seen by referring to FIG. 13, the positions of parts whose presence probabilities e are higher than the threshold TH are represented by white circles. On the other hand, as can be seen by referring to FIG. 13, the positions of parts whose presence probabilities e are equal to or lower than the threshold TH are represented by black circles. That is, the display mode (a color in the example depicted in FIG. 13) of the positions of the parts whose presence probabilities e are higher than the threshold TH is different from the display mode of the positions of the parts whose presence probabilities eⁿₖ are equal to or lower than the threshold TH. In this manner, in a case where a presence probability eⁿₖ is equal to or lower than the threshold TH, information that the part k corresponding to the presence probability eⁿₖ is an unseeable part may be displayed. Note that the difference between the display modes may not be a difference in color but may be a difference in size, shape, or the like.

Note that there may be not only one type of display mode of the positions of parts whose presence probabilities e are higher than the threshold TH but display modes may be different between different locations of parts. For example, the color of the right-shoulder part whose presence probability e is higher than the threshold TH may be orange, and the color of the right-elbow part whose presence probability e is higher than the threshold TH may be yellow.

In addition, the positions of parts whose presence probabilities e are higher than the threshold TH may be displayed by the presenting section 160, and, on the other hand, the positions of parts whose presence probabilities e are equal to or lower than the threshold TH may not be displayed by the presenting section 160. Alternatively, there can be cases where part positions and presence probabilities e are used, instead of presentation of part positions, for example. In such a case, part positions may not be displayed irrespective of whether or not presence probabilities e are higher than the threshold TH.

In addition, as can be seen by referring to FIG. 13, line segments (hereinbelow, also referred to as "connection lines") connecting part positions with each other are also displayed. The display mode of each of those connection lines may be changed according to the presence probabilities e of parts at its both ends or the like. For example, the display mode of each connection line may correspond to the display mode of either one of parts at both ends of the connection line. It should be noted that connection lines connecting part positions with each other may not be displayed.

Alternatively, the output section 116 may control presentation by the presenting section 160 of information representing the presence probabilities eⁿₖ of the parts k.

FIG. 14 is a figure for explaining an example of information representing the presence probabilities e of the parts k. As can be seen by referring to FIG. 14, the recognition image G30 is displayed by the presenting section 160. The human body B11 and the human body B12 are captured in the recognition image G30. Then, each part position of each of the human body B11 and the human body B12 is displayed (circular marks in FIG. 14). Then, information representing the presence probability of each part of the human body B12 (e.g. the presence probability of the left-eye part is depicted as "leye 0.1") is depicted.

Note that, in the example depicted in FIG. 14, only information representing the presence probabilities of some parts of the human body B12 is displayed. However, information representing the presence probabilities of all parts of the human body B12 may be displayed. In addition, in addition to information representing the presence probabilities of some or all parts of the human body B12, information representing the presence probabilities of some or all parts of the human body B11 may be displayed.

### (Procedure of Recognition Step)

Next, an example of the procedure of the recognition step according to the first embodiment of the present disclosure is explained with reference to FIG. 15. FIG. 15 is a flowchart depicting an example of the procedure of the recognition step according to the first embodiment of the present disclosure. Note that the flowchart depicted in FIG. 15 merely depicts an example of the procedure of the recognition step according to the first embodiment of the present disclosure. Accordingly, the procedure of the recognition step according to the first embodiment of the present disclosure is not limited to the example depicted in the flowchart in FIG. 15. It is supposed here that there is one image, and there is one human captured in the image, for simplification and convenience of explanation.

As depicted in FIG. 15, the CNN recognition processing section 112 causes an image sensed by the sensor section 130 to be input to the training result CNN (Sill). Then, the CNN recognition processing section 112 acquires a human-body center position C, relative positions (xₖ, yₖ) of parts k relative to the human-body center position C, and presence probabilities eₖ of the parts k output from the training result CNN on the basis of the image being input to the training result CNN.

The post-processing section 114 starts a repetitive process for each part (k = 0 to K-1) (S112). The post-processing section 114 computes the position of a part k by adding together the human-body center position C and the relative position (x, y) of the part relative to the human-body center position C. Thereby, the post-processing section 114 acquires the position of the part k. In addition, the post-processing section 114 acquires the presence probability e of the part k from the CNN recognition processing section 112 (S113). The post-processing section 114 compares the presence probability e of the part k and the predetermined threshold TH (S114).

In a case where the presence probability e of the part k is equal to or lower than the threshold TH ("NO" at S114), the output section 116 outputs, to the presenting section 160, information representing the position of the part k, and outputs, to the presenting section 160, information that the part k is an unseeable part (S116). According to control by the output section 116, the presenting section 160 presents the information representing the position of the part k, and presents information that the part k is an unseeable part. Thereafter, the operation transitions to the termination (S118) of the repetitive process for each part.

On the other hand, in a case where the presence probability e of the part k is higher than the threshold TH ("YES" at S114), the output section 116 outputs, to the presenting section 160, information representing the position of the part k (S117). According to control by the output section 116, the presenting section 160 presents the information representing the position of the part k. Thereafter, the operation transitions to the termination (S118) of the repetitive process for each part.

After the operation transitions to S118, in a case where the repetitive process for each part has not been executed K times, the operation transitions to the start point (Sill) of the repetitive process for each part. On the other hand, in a case where the repetitive process for each part has been executed K times, the recognition step ends.

Details of the recognition step executed by the information processing system 10 according to the first embodiment of the present disclosure have been explained thus far.

### [1.5. Autofocus Control]

As described above, the output section 116 performs control according to the positions of parts k and the presence probabilities eⁿₖ of the parts k. Here, the subject of the control by the output section 116 is not limited to presentation of information. For example, the output section 116 may control some functionality according to the positions of parts k and the presence probabilities eⁿₖ of the parts k. For example, the output section 116 may control a functionality of a camera to automatically focus according to the presence probabilities eⁿₖ of parts k (generally-called autofocus functionality). Hereinbelow, an example in which the output section 116 controls autofocus according to presence probabilities is explained with reference to FIG. 16 and FIG. 17.

FIG. 16 depicts figures for explaining an example in which presence probabilities are applied to autofocus. As can be seen by referring to FIG. 16, an image G40 is depicted as an example of a recognition image. In addition, a human body B11 and a human body B12 are captured in the image G40. Here, the human body B11 is captured as a smaller image than the human body B12, but its eyes are captured in the image G40 since the front side of the human body B11 faces the camera. On the other hand, the human body B12 is captured as a larger image than the human body B11, but its eyes are not captured in the image G40 since the back side of the human body B12 faces the camera.

An image G41 represents an example to which a typical technology of prioritizing focus on the right-eye part of a human body captured as a larger image is applied. In this example, the focus F1 is undesirably on the human body B12 whose right-eye part is not captured in the image G41. On the other hand, an image G42 represents an example to which the technology of the present disclosure of prioritizing focus on a right-eye part whose presence probability e is higher is applied. In this example, since the presence probability e of the right-eye part of the human body B11 is higher, the output section 116 controls the camera such that the focus F1 is on the right-eye part of the human body B11.

More specifically, the presence probability e⁰₀ of the right-eye part of the human body B11 is identified as higher than the threshold TH. On the other hand, the presence probability e¹₀ of the right-eye part of the human body B12 is identified as equal to or lower than the threshold TH. At this time, the output section 116 may control autofocus of the camera on the basis of the position (x, y) of the right-eye part of the human body B11 whose presence probability of the right-eye part is higher than the threshold TH.

Note that there can be cases where a plurality of human bodies whose presence probabilities of the right-eye parts are higher than the threshold TH is present. In such a case, the output section 116 may control autofocus of the camera on the basis of the right-eye part (x, y) of a human body that is captured as the largest image in the plurality of human bodies. The part to be in focus is not limited to a right-eye part but may be another part (e.g. the left eye, etc.) of a human body.

In addition, the autofocus control of the camera may be realized in any manner. For example, the output section 116 may acquire a value of the depth to the subject at the position (x, y) of the right-eye part of the human body B11, and control autofocus of the camera on the basis of the acquired depth value. The value of the depth to the subject may be measured by irradiation of an infrared ray, an ultrasonic wave, or the like (may be measured by a generally-called active method). Alternatively, the value of the depth to the subject may be measured by using light having passed through the lens of the camera (may be measured by a generally-called passive method).

Next, an example of the autofocus control is explained with reference to FIG. 17. FIG. 17 is a flowchart depicting an example of autofocus control. Note that the flowchart depicted in FIG. 17 merely depicts an example of the autofocus control. Accordingly, the autofocus control is not limited to the example depicted in the flowchart in FIG. 17. It is supposed here that there is one image, and presence probabilities of right-eye parts are used, for simplification and convenience of explanation.

As depicted in FIG. 17, the CNN recognition processing section 112 causes an image sensed by the sensor section 130 to be input to the training result CNN (S121). Then, the CNN recognition processing section 112 acquires human-body center positions Cⁿ, relative positions (xⁿ, yⁿ) of right-eye parts relative to the human-body center positions Cⁿ, and presence probabilities eⁿ of the right-eye parts output from the training result CNN on the basis of the image being input to the training result CNN.

The post-processing section 114 starts a repetitive process for each human (n = 0 to N-1) (S122). The post-processing section 114 computes the position of a right-eye part by adding together the human-body center position Cⁿ and the relative position (xⁿ, yⁿ) of the right-eye part relative to the human-body center position Cⁿ. Thereby, the post-processing section 114 acquires the position of the right-eye part. In addition, the post-processing section 114 acquires the presence probability eⁿ of the right-eye part from the CNN recognition processing section 112 (S123). The post-processing section 114 compares the presence probability eⁿ of the right-eye part and the predetermined threshold TH (S124).

In a case where the presence probability eⁿ of the right-eye part is equal to or lower than the threshold TH ("NO" at S124), the operation transitions to the termination (S127) of the repetitive process for each human. On the other hand, in a case where the presence probability eⁿ of the right-eye part is higher than the threshold TH ("YES" at S124), the output section 116 identifies whether or not the subject human body is captured as the largest image in humans having been found (S125).

In a case where the subject human body is captured not as the largest image in the humans having been found ("NO" at S125), the output section 116 causes the operation to transition to the termination (S127) of the repetitive process for each human. On the other hand, in a case where the subject human body is captured as the largest image in the humans having been found ("YES" at S125), the output section 116 stores the position of the right-eye part (S126). Thereafter, the operation transitions to the termination (S127) of the repetitive process for each human.

After the operation transitions to S127, in a case where the repetitive process for each human has not been executed N times, the operation transitions to the start point (S122) of the repetitive process for each human. On the other hand, in a case where the repetitive process for each human has been executed N times, the recognition step ends.

Details of the autofocus control executed by the information processing system 10 according to the first embodiment of the present disclosure have been explained thus far.

### [1.6. Advantageous Effects of First Embodiment]

According to the first embodiment of the present disclosure, it becomes possible to estimate the positions of parts of human bodies, and estimate the possibilities that the parts are captured in an image. For example, according to the first embodiment of the present disclosure, due to control of presentation of information according to presence probabilities of parts, a user can grasp whether or not the parts are captured in an image.

Alternatively, according to the first embodiment of the present disclosure, due to control of functionalities according to the presence probabilities of the parts, depth values of the positions of the parts captured in the image can be acquired. Alternatively, according to the first embodiment of the present disclosure, due to control of functionalities according to the presence probabilities of the parts, autofocus can be controlled highly precisely on the basis of the positions of the parts captured in the image.

Furthermore, according to the first embodiment of the present disclosure, determination as to whether or not a part is present in an image does not require use of information as to whether or not the position of the part can be estimated from a part position heat map.

### [1.7. Modification Example of First Embodiment]

In the case mainly explained in the description above, a human-body center position and relative positions of parts relative to the human-body center position are separately treated as part positions of a human body. However, a human-body center position and relative positions of parts may not be separately treated as part positions of a human body. At this time, for example, the process of computing part positions by adding together a human-body center position and relative positions of parts and the like can be omitted. In addition, it is sufficient if the movement of label positions in the displacement process is performed not on the human-body center position, but on the part positions.

The first embodiment of the present disclosure has been explained thus far.

### <2. Second Embodiment>

Next, the second embodiment of the present disclosure is explained.

### [2.1. Background]

As in the first embodiment of the present disclosure, human bodies are taken and explained as an example of subjects captured in an image in the second embodiment of the present disclosure also. However, subjects captured in an image are not limited to human bodies. In addition, as in the first embodiment of the present disclosure, parts (body parts) of human bodies are taken and explained as an example of predetermined areas of subjects in the second embodiment of the present disclosure also.

Here, for example, there can be cases where a plurality of human-body center positions is close to each other or overlaps one on another (e.g. in a scene where a plurality of humans is likely to get crowded, etc.). For example, possible examples of scenes where a plurality of humans is likely to get crowded include street scenes, sport scenes, crowd scenes, and the like.

FIG. 18 depicts figures for explaining an example in which center positions overlap. As can be seen by referring to FIG. 18, a center position c1 of a first human body captured in an image G61 and a rectangular area R61 surrounding the first human body are depicted. In addition, a center position c2 of a second human body captured in the image G61 and a rectangular area R62 surrounding the second human body are depicted. Along with a lapse of time from the image G61 through an image G62 to an image G63, the center position c1 and the center position c2 get close to each other and overlap one on another.

In a case where a plurality of human-body center positions is close to each other or overlaps one on another or in other similar cases as in this example, a training process is performed undesirably without making sufficient distinctions between the plurality of human-body center positions even if the positions of respective parts of the plurality of human bodies are separate from each other. Thereby, there can be cases where part positions of a plurality of human bodies based on training results are not estimated separately, and the precision of estimation of the part positions of the plurality of human bodies is not improved.

There can be a demand for reduction of the resolution of estimation results particularly for the purpose of computational cost reduction. However, it is considered that as the resolution of estimation results is lowered, the possibility that the center positions overlap one on another increases undesirably.

In view of this, in a technology having been disclosed (hereinbelow, also referred to as "Disclosed Technology 2"), an index (centerness) that numerically expresses the distances between the center position of a rectangular area (bounding box) surrounding a subject captured in an image and points present in the rectangular area is introduced into a training process. According to Disclosed Technology 2, the center position of a subject can be estimated on the basis of results of a training process into which the centerness has been introduced.

Disclosed Technology 2 is explained with reference to FIG. 19. FIG. 19 is a figure for explaining Disclosed Technology 2. As can be seen by referring to FIG. 19, an image G92 is depicted. In addition, as can be seen by referring to FIG. 19, a rectangular area R91 (bounding box) surrounding a human body B91 captured in the image G92 is depicted, and the upward, downward, leftward and rightward distances from a point present in the rectangular area R91 to the rectangular area R91 are depicted as (t, b, 1, r).

In Disclosed Technology 2, an index (centerness) that numerically expresses the distances (t, b, 1, r) is learned. According to Disclosed Technology 2, the centerness is estimated on the basis of results of a training process into which the centerness has been introduced, and the center position of the human body B91 is estimated on the basis of the estimated centerness. However, Disclosed Technology 2 requires weighted-averaging of the centerness for the purpose of estimating the center position of the human body B91.

Furthermore, one may consider estimating the positions of parts by a similar technique. One may consider that the precision of estimation of the positions of parts of a human body based on training results is improved thereby also in a case where a plurality of human-body center positions is close to each other or overlaps one on another or in other similar cases. However, estimation of the positions of parts requires weighted-averaging of the positions of the parts. Accordingly, the weighted-averaging of the positions of the parts undesirably increases the computational cost.

In view of this, mainly in a technology proposed according to the second embodiment of the present disclosure, the positions of human body parts can be estimated more highly precisely while the computational cost is reduced even in a case where a plurality of human-body center positions is close to each other or overlaps one on another or in other similar cases.

The background of the second embodiment of the present disclosure has been explained thus far.

### [2.2. Details of Training Step]

Next, details of a training step executed by the information processing system 10 according to the second embodiment of the present disclosure are explained with reference to FIG. 20 to FIG. 24.

### (Training DB)

Input images and labels are stored on a training DB in association with each other. The input images and the labels represent training data used for a training process. As the labels, human-body center positions Cⁿ (n = 0 to N-1, where N is the number of humans) captured in the input images and relative positions (xⁿₖ, yⁿₖ) of parts k (k = 0 to K-1, where K is the number of parts) relative to the human-body center positions Cₙ are associated with each other.

### (CNN Training Section 118)

The CNN training section 118 acquires input images (first image data) and labels from the training DB at the training step.

FIG. 20 depicts figures for explaining functionalities of the CNN training section 118. As can be seen by referring to FIG. 20, an input image G51 is depicted. As examples of subjects, a human body B11 (first subject), and a human body B12 (second subject) are captured in the input image G51. At this time, the CNN training section 118 acquires labels corresponding to the human body B11 and labels corresponding to the human body B12 as labels corresponding to the input image G51. Whereas the right eyes are taken and explained as examples of parts here, parts other than the right eyes may be used.

More specifically, the CNN training section 118 acquires a center position c1 (cx1, cy1) of the human body B11 and a relative position P1 (Px1, Py1) of the right-eye part relative to the center position c1 of the human body B11 as labels corresponding to the human body B11. Here, the center position of the human body B11 represents an example of the "first reference position." In addition, the relative position P1 (Px1, Py1) represents an example of the "first relative position."

In addition, the CNN training section 118 acquires a center position c2 (cx2, cy2) of the human body B12 and a relative position P2 (Px2, Py2) of the right-eye part relative to the human-body center position c2 as labels corresponding to the human body B12. Here, the center position of the human body B12 represents an example of the "second reference position." In addition, the relative position P2 (Px2, Py2) represents an example of the "second relative position."

Next, the CNN training section 118 performs a process of moving the center position c1 (cx1, cy1) of the human body B11 and the center position c2 (cx2, cy2) of the human body B12 away from each other (hereinbelow, also referred to as a "moving process"). Thereby, the center positions of the human body B11 and the human body B12 are learned after a distinction is made between the center positions even in a case where the original center positions are close to each other or overlap one on another or in other similar cases. Accordingly, it becomes possible to separately estimate respective part positions of a plurality of human bodies based on training results, and it can be expected that the positions of parts are estimated more highly precisely.

As can be seen by referring to FIG. 20, an input image G52 is depicted, and a center position c1' (cx1', cy1') and a center position c2' (cx2', cy2') are depicted as results of performing a process of moving the center position c1 (cx1, cy1) and the center position c2 (cx2, cy2) away from each other. The center position c1' (cx1', cy1') represents an example of the third reference position, and the center position c2' (cx2', cy2') represents an example of the fourth reference position.

Note that, in the example depicted in FIG. 20, the moving direction of the center position c1 (cx1, cy1) and the moving direction of the center position c2 (cx2, cy2) are opposite directions. However, the moving direction of the center position c1 (cx1, cy1) and the moving direction of the center position c2 (cx2, cy2) may not be opposite directions. Furthermore, in the example depicted in FIG. 20, the moving distance of the center position c1 (cx1, cy1) and the moving distance of the center position c2 (cx2, cy2) are the same distances. However, the moving distance of the center position c1 (cx1, cy1) and the moving distance of the center position c2 (cx2, cy2) may not be the same distances.

The CNN training section 118 updates the relative position P1 (Px1, Py1) according to the process of moving the center position c1 (cx1, cy1) and the center position c2 (cx2, cy2) away from each other. More specifically, the CNN training section 118 obtains updated P1' (Px1 + cx1 - cx1', Py1 + cy1 - cy1') by subtracting the movement vector (cx1' - cx1, cy1' - cy1) of the center position c1 (cx1, cy1) from the relative position P1 (Px1, Py1). Note that an updated relative position P1' represents an example of the third relative position.

The CNN training section 118 updates the relative position P2 (Px2, Py2) according to the process of moving the center position c1 (cx1, cy1) and the center position c2 (cx2, cy2) away from each other. More specifically, the CNN training section 118 obtains updated P2' (Px2 + cx2 - cx2', Py2 + cy2 - cy2') by subtracting the movement vector (cx2' - cx2, cx2' - cx2) of the center position c2 (cx2, cy2) from the relative position P2 (Px2, Py2). Note that an updated relative position P2' represents an example of the fourth relative position.

In addition, it is mainly supposed in the second embodiment of the present disclosure that both the center position c1 (cx1, cy1) and the center position c2 (cx2, cy2) are moved. However, the center position c1 (cx1, cy1) may be moved, and the center position c2 (cx2, cy2) may not be moved. At this time, the moved center position c1' (cx1', cy1') represents an example of the third reference position, and the center position c2 (cx2, cy2) represents an example of the fourth reference position.

Alternatively, the center position c2 (cx2, cy2) may be moved, and the center position c1 (cx1, cy1) may not be moved. At this time, the center position c1 (cx1, cy1) represents an example of the third reference position, and the moved center position c2' (cx2', cy2') represents an example of the fourth reference position. In this manner, the second embodiment of the present disclosure is applied also to a case where only either one of the center position c1 (cx1, cy1) and the center position c2 (cx2, cy2) is moved.

FIG. 21 is a figure schematically depicting a process of moving two human-body center positions away from each other. As can be seen by referring to FIG. 21, illustrations of the two human bodies captured in the image G51 are omitted, but a rectangular area R1 and a rectangular area R2 surrounding the two human bodies are depicted. In addition, a center position C1 of a first human body and a center position C2 of a second human body are depicted. If a process of moving the center position C1 and the center position C2 away from each other is performed, the center position C1 and the center position C2 move in the directions represented by arrows.

FIG. 22 is a figure schematically depicting a process of moving four human-body center positions away from each other. As can be seen by referring to FIG. 22, illustrations of the four human bodies captured in the image G61 are omitted but four human-body center positions C1 to C4 are depicted. If a process of moving the center positions C1 to C4 away from each other is performed, the center positions C1 to C4 move in the directions represented by arrows. Note that the number of center positions to be moved away from each other is not limited as long as it is greater than one.

The CNN training section 118 performs a training process on the basis of images acquired from the training DB and changed labels. Here, the specific method of the training process is not limited.

For example, the CNN training section 118 calculates an error between each of a human-body center position Cⁿ and a relative position (xⁿₖ, yⁿₖ) of a part k relative to the human-body center position Cₙ output from the CNN on the basis of an image being input to the CNN, and a corresponding label, and causes a weighted sum of the calculated errors to backwardly propagate (back propagation) (by using the error backpropagation) to thereby update weights of the CNN. For example, a stochastic gradient descent (SGD) may be used as the weight updating technique. However, the weight updating technique is not limited to the SGD.

After the weight updating is ended, the weight updating based on an image and labels newly acquired from the training DB is performed. Then, after the weight updating is performed a predetermined number of times, the training process is ended. Here, the predetermined number of times is not limited as in the first embodiment of the present disclosure.

### (Procedure of Training Step)

Next, an example of the procedure of the training step according to the second embodiment of the present disclosure is explained with reference to FIG. 23. FIG. 23 is a flowchart depicting an example of the procedure of the training step according to the second embodiment of the present disclosure. Note that the flowchart depicted in FIG. 23 merely depicts an example of the procedure of the training step according to the second embodiment of the present disclosure. Accordingly, the procedure of the training step according to the second embodiment of the present disclosure is not limited to the example depicted in the flowchart in FIG. 23. It is supposed here that there is one image, and one part is treated, for simplification and convenience of explanation.

As depicted in FIG. 23, the CNN training section 118 acquires the image and the labels from the training DB (S201). Then, the CNN training section 118 computes human-body center positions c of all humans captured in the image, and stores the center positions c as new center positions c' (S202).

The CNN training section 118 identifies whether or not there is a combination of center positions c whose distance therebetween is shorter than a threshold (S203). In a case where there is a combination of center positions c whose distance therebetween is shorter than the threshold ("YES" at S203), the CNN training section 118 performs the process of moving the center positions c of the combination away from each other, and computes new center positions c' (S204). Then, the operation transitions to S203. On the other hand, in a case where there are no combinations of center positions c whose distances therebetween are shorter than the threshold ("NO" at S203), the CNN training section 118 computes relative positions (x', y') of parts relative to the center positions c' of all the human bodies captured in the image (S205).

The CNN training section 118 performs a training process on the basis of the image, human-body center positions c' of all the humans captured in the image and relative positions (x', y') of the parts. The training process generates a training result CNN, which is then stored on the storage section 140.

(Specific Example of Process of Moving Center Positions Away from Each Other)

Next, a specific example of the process of moving a plurality of human-body center positions away from each other is explained with reference to FIG. 24. The specific example is an example in which a model using a spring model and Coulomb force is used. Here, Coulomb force represents repulsive force that acts between the center positions. The repulsive force helps to prevent the center positions from being too close to each other. The spring model represents force that attracts the original center position and the recomputed center position to each other. The attracting force helps to prevent the recomputed center position from being too far from the original position.

FIG. 24 is a flowchart depicting a specific example of the process of moving a plurality of human-body center positions away from each other. Note that, in the example in depicted in FIG. 24, energy, force, d, and dc are variables that can store values. In addition, dist is a function for calculating the distance between two points. END_ENERGY is a constant.

The CNN training section 118 stores original center positions (S221). That is, the CNN training section 118 stores a center position c⁰ as C⁰, ... and stores a center position c^{N-1} as C^{N-1}. In a case where energy is greater than END_ENERGY, the CNN training section 118 repeats the following process (S223).

The CNN training section 118 assigns 0 to energy (S224). Then, the CNN training section 118 starts a repetitive process for each human (in a case where n = 0 to N-1) (S225). First, the CNN training section 118 assigns (0, 0) to force (S226). Then, the CNN training section 118 starts the repetitive process for each human (in a case where m = 0 to N-1) (S231). In a case where m is equal to n ("NO" at S232), the CNN training section 118 causes the operation to transition to the termination of the repetitive process for each human (in a case where m = 0 to N-1).

On the other hand, in a case where m is not equal to n ("YES" at S232), the CNN training section 118 computes a distance dist(cⁿ, c^{m}) between cⁿ and c^{m}, and assigns the computed distance dist(cⁿ, c^{m}) to d (S233). The CNN training section 118 adds a repulsive force according to d to force (S235), and causes the operation to transition to the termination (S236) of the repetitive process for each human (in a case where m = 0 to N-1).

When the repetitive process for each human (in a case where m = 0 to N-1) ends, the CNN training section 118 computes a distance dist(cⁿ, Cⁿ) between cⁿ and Cⁿ, and assigns the computed distance dist(cⁿ, Cⁿ) to dc (S241). The CNN training section 118 subtracts the gravitational force according to dc from force (S243). The CNN training section 118 updates the center position cⁿ on the basis of force (S245). The CNN training section 118 updates energy on the basis of the updated center position cⁿ (S246).

Then, the CNN training section 118 causes the operation to transition to the termination (S251) of the repetitive process for each human (in a case where n = 0 to N-1). In a case where the repetitive process for each human (in a case where n = 0 to N-1) has ended, and energy has become equal to or smaller than END ENERGY, the CNN training section 118 ends the repetitive process (S253).

Details of the training step executed by the information processing system 10 according to the second embodiment of the present disclosure have been explained thus far.

### [2.3. Details of Recognition Step]

Next, details of the recognition step executed by the information processing system 10 according to the second embodiment of the present disclosure are explained.

### (CNN Recognition Processing Section 112)

The CNN recognition processing section 112 functions as an acquiring section that acquires a recognition image (second image data) and the training result CNN at the recognition step.

It is mainly supposed here in the second embodiment of the present disclosure also that the CNN recognition processing section 112 acquires, as the recognition image, an image sensed by the sensor section 130. However, as in the first embodiment of the present disclosure, the CNN recognition processing section 112 may acquire the recognition image from another location. In addition, the training result CNN can be acquired from the storage section 140. However, as in the first embodiment of the present disclosure, in a case where the training apparatus and the reasoning apparatus are realized by separate computers or in other similar cases, the acquired training result CNN may be a training result CNN transmitted from the training apparatus, and received by the communication section 150 of the reasoning apparatus.

Furthermore, the CNN recognition processing section 112 performs the recognition process on the basis of the recognition image and the training result CNN. More specifically, the CNN recognition processing section 112 functions as a reasoning section that obtains the center positions Cⁿ (fifth reference position) of human bodies (second subjects) captured in the recognition image and relative positions (xⁿₖ, yⁿₖ) of parts k relative to the center positions Cⁿ (fifth relative positions). Here, the specific method of the recognition process is not limited. For example, the CNN recognition processing section 112 acquires the human-body center positions Cⁿ and the relative positions (xⁿₖ, yⁿₖ) of the parts k relative to the human-body center positions Cₙ output from the training result CNN on the basis of the recognition image being input to the training result CNN.

### (Post-Processing Section 114)

The post-processing section 114 computes each part position corresponding to a combination of a human body n and a part k on the basis of the human-body center position Cⁿ and the relative position (xⁿₖ, yⁿₖ) of the part k relative to the human-body center position Cₙ. More specifically, regarding each combination of a human body n and a part k, the post-processing section 114 computes a part position corresponding to the combination of the human body n and the part k by adding together the human-body center position C and the relative position (x, y) of the part relative to the human-body center position C.

### (Output Section 116)

The output section 116 performs a process according to each part position computed by the post-processing section 114. For example, as in the first embodiment according to the present disclosure, the output section 116 may control display of each part position by the presenting section 160.

Alternatively, the output section 116 may identify whether or not a part position of a human body computed by the post-processing section 114 is past a predetermined line in a recognition image in a predetermined direction. For example, the output section 116 may identify whether or not a part position of a human body computed by the post-processing section 114 is past an offside line in the goal direction. Alternatively, the output section 116 may count the number of center positions of a plurality of human bodies computed by the post-processing section 114.

### (Procedure of Recognition Step)

Next, an example of the procedure of the recognition step according to the second embodiment of the present disclosure is explained with reference to FIG. 25. FIG. 25 is a flowchart depicting an example of the procedure of the recognition step according to the second embodiment of the present disclosure. Note that the flowchart depicted in FIG. 25 merely depicts an example of the procedure of the recognition step according to the second embodiment of the present disclosure. Accordingly, the procedure of the recognition step according to the first embodiment of the present disclosure is not limited to the example depicted in the flowchart in FIG. 25. It is supposed here that there is one image, and there is one human captured in the image, for simplification and convenience of explanation.

As depicted in FIG. 25, the CNN recognition processing section 112 causes an image sensed by the sensor section 130 to be input to the training result CNN (S211). Then, the CNN recognition processing section 112 acquires a human-body center position C and relative positions (xₖ, yₖ) of parts k relative to the human-body center position C output from the training result CNN on the basis of the image being input to the training result CNN.

The post-processing section 114 computes the position of a part k by adding together the human-body center position C and the relative position (x, y) of the part relative to the human-body center position C. Thereby, the post-processing section 114 acquires the position of the part k. For example, the output section 116 may control display of part positions by the presenting section 160.

Details of the recognition step executed by the information processing system 10 according to the second embodiment of the present disclosure have been explained thus far.

### [2.4. Application Example]

According to the second embodiment of the present disclosure, it can be expected that the precision of estimation of part positions is improved in a case where a plurality of human-body center positions is close to each other or overlaps one on another or in other similar cases. Accordingly, it is useful to apply estimated part positions to various scenes. First, an example in which estimated part positions are applied to a sport scene is explained.

### (Application to Sport Scene)

FIG. 26 is a figure for explaining an example in which estimated part positions are applied to a sport scene. As can be seen by referring to FIG. 26, an image G70 obtained by capturing a scene in a soccer play as an example of sports is depicted. A goal is installed in the direction "GOAL DIRECTION." A human body B11 is the human body of a player who is closest to the goal in defending players. In addition, a human body B12 is the human body of a player who is closest to the goal in offending players. It is supposed here that estimated part positions are used for identification of an offside play.

FIG. 27 is a figure for explaining an offside line. As can be seen by referring to FIG. 27, a center position C1 of the human body B11 (FIG. 26) of the player who is closest to the goal in the defending players and a rectangular area R71 surrounding the human body B11 are depicted. A goal-side line A of the rectangular area R71 is an offside line. In addition, a center position C2 of the human body B12 (FIG. 26) of the player who is closest to the goal in the offending players and a rectangular area R72 surrounding the human body B12 are depicted. A goal-side line B of the rectangular area R72 also is depicted. Here, the "goal direction" is defined as the "+ direction."

FIG. 28 is a flowchart depicting an example in which estimated part positions are applied to offside identification. It is supposed here that there is one image, for simplification and convenience of explanation. As depicted in FIG. 28, the CNN recognition processing section 112 causes an image sensed by the sensor section 130 to be input to the training result CNN (S261). Then, the CNN recognition processing section 112 acquires human-body center positions Cⁿ and relative positions (xⁿₖ, yⁿₖ) of parts k relative to the human-body center positions Cⁿ output from the training result CNN on the basis of the image being input to the training result CNN.

The post-processing section 114 computes the positions of all parts k of each human by adding together the human-body center position Cⁿ and the relative positions (xⁿₖ, yⁿₖ) of the parts k relative to the human-body center position Cⁿ (S262). Thereby, the post-processing section 114 acquires the positions of all the parts of each human (K parts of each of N humans). The output section 116 identifies the team of each human on the basis of the color or the like of the human body of each human captured in the image (S263).

Next, the output section 116 computes a coordinate A (offside line) in the + direction of a part position A which is closest to the goal in defending players (S264). Next, the output section 116 computes a coordinate B (hereinbelow, also referred to as an "offending-side front line") in the + direction of a part position which is closest to the goal in offending players (S265). The output section 116 identifies whether or not the coordinate B is past the coordinate A (offside line) in the + direction (S266).

In a case where it is identified that the coordinate B (offending-side front line) is not past the coordinate A (offside line) in the + direction ("NO" at S266), the output section 116 identifies the play as not an offside play (S267). On the other hand, in a case where it is identified that the coordinate B (offending-side front line) is past the coordinate A (offside line) in the + direction ("YES" at S266), the output section 116 identifies the play as an offside play (S268). Then, the output section 116 controls the communication section 150 to transmit an alert to a terminal of a referee (S269).

Note that, in the example explained with reference to FIG. 26 to FIG. 28, it is identified whether or not the offending-side front line is past the offside line in the goal direction. However, the output section 116 may identify whether or not a part position of a human body computed by the post-processing section 114 is past a line other than an offside line in a recognition image in a predetermined direction. For example, the output section 116 may recognize a line captured in a recognition image, and identify whether or not a part position of a human body is past the line (e.g. out-of-bounds in soccer, basketball, or the like).

Next, an example in which estimated part positions are applied to a street scene is explained.

### (Application to Street Scene)

FIG. 29 is a figure for explaining an example in which estimated part positions are applied to a street scene. As can be seen by referring to FIG. 29, an image G80 in which a street scene is captured is depicted. A plurality of mutually overlapping humans is captured in an area R81, an area R82, and the like in the image G80. For example, the output section 116 may count the number of center positions of a plurality of human bodies (i.e. the number of humans) computed by the post-processing section 114. As described above, since training is performed such that center positions are moved away from each other in the second embodiment of the present disclosure, it is considered that the number of center positions is counted highly precisely even in a case where the center positions are close to each other or overlap one on another.

### [2.5. Advantageous Effects of Second Embodiment]

According to the second embodiment of the present disclosure, a plurality of human-body center positions is learned after a distinction is made between the center positions by moving the center positions away from each other even in a case where the original center positions are close to each other or overlap one on another or in other similar cases. Accordingly, it becomes possible to separately estimate respective part positions of a plurality of human bodies based on training results, and it can be expected that the positions of parts are estimated more highly precisely. Thereby, even in a case where the resolution of estimation results is low, the positions of parts can be estimated more highly precisely.

Furthermore, since the positions of part are estimated more highly precisely, it becomes possible to lower the resolution of estimation results, and the computation amount can be reduced. In addition, according to the second embodiment of the present disclosure, part positions can be determined simply on the basis of a center position and relative positions of parts relative to the center position that are to be added together. Accordingly, the computational cost required for estimation of the part positions is reduced.

The second embodiment of the present disclosure has been explained thus far.

### <3. Combination Of Embodiments>

In the description above, the first embodiment of the present disclosure and the second embodiment of the present disclosure have been explained separately. However, the first embodiment of the present disclosure and the second embodiment of the present disclosure do not necessarily have to be implemented separately but may be implemented in combination as appropriate. Hereinbelow, an example of operation of the information processing system 10 in a case where the first embodiment of the present disclosure and the second embodiment of the present disclosure are combined is explained with reference to FIG. 30 and FIG. 31.

### (Procedure of Training Step)

FIG. 30 is a flowchart depicting an example of the procedure of a training step in a case where the first embodiment of the present disclosure and the second embodiment of the present disclosure are combined. It is supposed here that there is one image, for simplification and convenience of explanation.

As depicted in FIG. 30, the CNN training section 118 acquires an input image I and acquires labels from the training DB (S300). As the labels, human-body center positions Cⁿ (n = 0 to N-1, where N is the number of humans) captured in the input image I, relative positions (xⁿₖ, yⁿₖ) of parts k (k = 0 to K-1, where K is the number of parts) relative to the human-body center positions Cₙ, and presence/absence information vⁿₖ regarding the parts k are associated with each other. The CNN training section 118 stores center positions c as new center positions c' (S301).

Then, the CNN training section 118 identifies whether or not there is a center position combination cⁿ and c^{m} that satisfies distance (cⁿ, c^{m}) < TH' in a single image (S302). In a case where there is a combination that satisfies distance (cⁿ, c^{m}) < TH' ("YES" at S302), the CNN training section 118 moves the center positions such that cⁿ and c^{m} are moved away from each other, and computes new center positions c'ⁿ and c'^{m} (S303). Then, the operation transitions to S302.

On the other hand, in a case where there are no combinations that satisfy distance (cⁿ, c^{m}) < TH' ("NO" at S302), the CNN training section 118 causes the operation to transition to S304. The CNN training section 118 computes a relative position (x'ⁿₖ, y'ⁿₖ) and presence/absence information v'ⁿₖ regarding the part k on the basis of the new Cⁿ (S304).

Next, the CNN training section 118 computes an image I' by the image position/label position displacement process and the partialarea hiding process on the image I (S305). Then, the CNN training section 118 computes c"ⁿ and v"ⁿₖ on the basis of the displacement process and the hiding process (S306). The CNN training section 118 performs a training process on the basis of the image I' obtained after the displacement process and the hiding process are implemented and changed labels x^{'n}ₖ, y'ⁿₖ, c"ⁿ, and v"ⁿₖ (S307). The training process generates a training result CNN, which is then stored on the storage section 140.

The procedure of the training step in a case where the first embodiment of the present disclosure and the second embodiment of the present disclosure are combined has been explained thus far.

### (Procedure of Recognition Step)

FIG. 31 is a flowchart depicting an example of the procedure of a recognition step in a case where the first embodiment of the present disclosure and the second embodiment of the present disclosure are combined. It is supposed here that there is one image, for simplification and convenience of explanation.

As depicted in FIG. 31, the CNN recognition processing section 112 causes an image sensed by the sensor section 130 to be input to the training result CNN (S321). Then, the CNN recognition processing section 112 acquires human-body center positions Cⁿ output from the training result CNN on the basis of an image being input to the training result CNN (S322).

The post-processing section 114 starts a repetitive process for each human (n = 0 to N-1) (S323). The post-processing section 114 recognizes relative positions (xⁿₖ, yⁿₖ) and presence probabilities eⁿₖ of parts associated with the center positions Cⁿ (S324). The post-processing section 114 computes the position of a part k by adding together the human-body center position C and the relative position (x, y) of the part relative to the human-body center position C. The post-processing section 114 compares the presence probability e of the part k and the predetermined threshold TH (S325).

In a case where the presence probability e of the part k is equal to or lower than the threshold TH ("NO" at S325), the output section 116 outputs, to the presenting section 160, information representing the position of the part k, and outputs, to the presenting section 160, information that the part k is an unseeable part (S327). According to control by the output section 116, the presenting section 160 presents the information representing the position of the part k, and presents information that the part k is an unseeable part. Thereafter, the operation transitions to the termination (S328) of the repetitive process for each human.

On the other hand, in a case where the presence probability e of the part k is higher than the threshold TH ("YES" at S325), the output section 116 outputs, to the presenting section 160, information representing the position of the part k (S326). According to control by the output section 116, the presenting section 160 presents the information representing the position of the part k. Thereafter, the operation transitions to the termination (S328) of the repetitive process for each human.

After the operation transitions to S328, in a case where the repetitive process for each human has not been executed N times, the operation transitions to the start point (S323) of the repetitive process for each human. On the other hand, in a case where the repetitive process for each human has been executed N times, the recognition step ends.

The procedure of the recognition step in a case where the first embodiment of the present disclosure and the second embodiment of the present disclosure are combined has been explained thus far.

### <4. Hardware Configuration Example>

Next, a hardware configuration example of the information processing system 10 according to the embodiments of the present disclosure is explained with reference to FIG. 32. FIG. 32 is a block diagram depicting a hardware configuration example of the information processing system 10 according to the embodiments of the present disclosure. Note that the information processing system 10 does not necessarily have to have the entire hardware configuration depicted in FIG. 32, and a part of the hardware configuration depicted in FIG. 32 may not be present in the information processing system 10.

As depicted in FIG. 32, the information processing system 10 includes a CPU (Central Processing unit) 901, a ROM (Read Only Memory) 903, and a RAM (Random Access Memory) 905. In addition, the information processing system 10 may include a host bus 907, a bridge 909, an external bus 911, an interface 913, an input apparatus 915, an output apparatus 917, a storage apparatus 919, a drive 921, a connection port 923, and a communication apparatus 925. Furthermore, the information processing system 10 may include an image-capturing apparatus 933 and a sensor 935 as necessary. The information processing system 10 may have, instead of or in addition to the CPU 901, a processing circuit like one called a GPU (Graphics Processing Unit), a DSP (Digital Signal Processor), or an ASIC (Application Specific Integrated Circuit).

The CPU 901 functions as a processing unit and a control apparatus, and controls the whole or a part of operation in the information processing system 10 according to various types of programs recorded on the ROM 903, the RAM 905, the storage apparatus 919, or a removable recording medium 927. The ROM 903 stores thereon programs, calculation parameters, and the like to be used by the CPU 901. The RAM 905 temporarily stores thereon programs to be used in execution by the CPU 901, parameters that change as appropriate in the execution and the like. The CPU 901, the ROM 903, and the RAM 905 are interconnected by the host bus 907 including internal buses such as a CPU bus. Furthermore, the host bus 907 is connected to the external bus 911 such as a PCI (Peripheral Component Interconnect/Interface) bus via the bridge 909.

The input apparatus 915 is an apparatus such as a button, for example, to be manipulated by a user. The input apparatus 915 may include a mouse, a keyboard, a touch panel, a switch, a lever, and the like. In addition, the input apparatus 915 may include a microphone that senses sounds of a user. For example, the input apparatus 915 may be a remote control apparatus using infrared rays or other radio waves or may be externally connected equipment 929 such as a mobile phone that supports manipulation of the information processing system 10. The input apparatus 915 includes an input control circuit that generates an input signal on the basis of information input by a user, and outputs the input signal to the CPU 901. The user inputs various types of data to the information processing system 10, gives an instruction about a process/action, and so on by manipulating the input apparatus 915. In addition, the image-capturing apparatus 933 mentioned later also can function as an input apparatus by capturing a movement of the hands of a user, fingers of the user, or the like. At this time, a pointing position may be decided according to a movement of the hands or the directions of fingers.

The output apparatus 917 includes an apparatus capable of giving a visual or auditory notification about acquired information to a user. For example, the output apparatus 917 can be a display apparatus such as an LCD (Liquid Crystal Display) or an organic EL (Electro-Luminescence) display, or a sound output apparatus such as speakers or headphones. In addition, the output apparatus 917 may include a PDP (Plasma Display Panel), a projector, a hologram, a printer apparatus, and the like. The output apparatus 917 outputs results obtained by processes by the information processing system 10 as a video of text or images, as auditory information such as sounds or audio information. In addition, the output apparatus 917 may include a light or the like for lighting up the surrounding space.

The storage apparatus 919 is an apparatus for data storage configured as an example of a storage section of the information processing system 10. For example, the storage apparatus 919 includes a magnetic storage device, a semiconductor storage device, an optical storage device, or a magneto-optical storage device, such as an HDD (Hard Disk Drive). The storage apparatus 919 stores thereon programs to be executed by the CPU 901, various types of data, various types of data acquired from the outside, and the like.

The drive 921 is a reader/writer for the removable recording medium 927 such as a magnetic disc, an optical disc, a magneto-optical disc, or a semiconductor memory, and is built in or externally attached to the information processing system 10. The drive 921 reads out information recorded on the attached removable recording medium 927, and outputs the information to the RAM 905. In addition, the drive 921 writes records in the attached removable recording medium 927.

The connection port 923 is a port for directly connecting equipment to the information processing system 10. For example, the connection port 923 can be a USB (Universal Serial Bus) port, an IEEE 1394 port, an SCSI (Small Computer System Interface) port, or the like. In addition, the connection port 923 may be an RS-232C port, an optical audio terminal, an HDMI (registered trademark) (High-Definition Multimedia Interface) port, or the like. By connecting the externally connected equipment 929 to the connection port 923, various types of data can be exchanged between the information processing system 10 and the externally connected equipment 929.

For example, the communication apparatus 925 is a communication interface including a communication device or the like for connection to a network 931. For example, the communication apparatus 925 can be a communicate card or the like for cable or wireless LAN (Local Area Network), Bluetooth (registered trademark), or WUSB (Wireless USB). In addition, the communication apparatus 925 may be an optical communication router, an ADSL (Asymmetric Digital Subscriber Line) router, a modem for various types of communications, or the like. For example, the communication apparatus 925 transmits and receives signals or the like to or from the Internet or other communication equipment by using a predetermined protocol such as TCP/IP. In addition, the network 931 connected to the communication apparatus 925 is a network connected by a cable or wirelessly, and is, for example, the Internet, a home LAN, infrared communication, radio wave communication, satellite communication, or the like.

For example, the image-capturing apparatus 933 is an apparatus that captures images of a real space, and generates captured images by using various types of members such as an imaging element such as a CCD (Charge Coupled Device) or a CMOS (Complementary Metal Oxide Semiconductor) or a lens for controlling image-formation of subject images on the imaging element. The image-capturing apparatus 933 may be one that captures still images or may be one that captures videos.

For example, the sensor 935 is various types of sensors such as a distance measurement sensor, an acceleration sensor, a gyro sensor, a geomagnetic sensor, a vibration sensor, an optical sensor, or a sound sensor. For example, the sensor 935 acquires information regarding the state of the information processing system 10 itself such as the posture of the housing of the information processing system 10 and information regarding the surrounding environment of the information processing system 10 such as the brightness of or noise in the surrounding environment of the information processing system 10. In addition, the sensor 935 may include a GPS sensor that receives GPS (Global Positioning System) signals, and measures the latitude, longitude, and altitude of the apparatus.

### <5. Conclusion>

While preferred embodiments of the present disclosure have been explained in detail with reference to the attached figures thus far, the technical scope of the present disclosure is not limited to the examples. It is obvious that it is possible for those with ordinary knowledge in the technical field of the present disclosure to conceive of various types of modification example or corrected example within the scope of the technical idea described in claims, and those various types of modification example or corrected example are understood as belonging to the technical scope of the present disclosure certainly.

In addition, the advantageous effects described in the present specification are presented merely for explanation or illustration, but not for limitation. That is, the technology according to the present disclosure can exhibit other advantageous effects that are obvious for those skilled in the art from the description of the present specification, along with the advantageous effects described above, or instead of the advantageous effects described above.

Note that the following configuration is belonged to the technical scope of the present disclosure.
(1) A reasoning apparatus including:
   an acquiring section that acquires second image data and a trained model obtained on the basis of
      a third reference position and a fourth reference position that are obtained by a moving process of moving a first reference position of a first subject captured in first image data and a second reference position of a second subject captured in the first image data away from each other, and
      a third relative position and a fourth relative position that are obtained on the basis of a first relative position of a predetermined area of the first subject relative to the first reference position, a second relative position of a predetermined area of the second subject relative to the second reference position, and the moving process; and
   a reasoning section that obtains a fifth reference position of a third subject captured in the second image data and a fifth relative position of a predetermined area of the third subject relative to the fifth reference position on the basis of the trained model and the second image data.
(2) The reasoning apparatus according to (1) above, in which the reasoning apparatus includes a processing section that computes a position of the predetermined area of the third subject by adding together the fifth reference position and the fifth relative position.
(3) The reasoning apparatus according to (2) above, in which the reasoning apparatus includes an output section that performs a process according to the position of the predetermined area of the third subject.
(4) The reasoning apparatus according to (3) above, in which the output section controls presentation of information representing the position of the predetermined area of the third subject.
(5) The reasoning apparatus according to (3) above, in which the output section identifies whether or not the position of the predetermined area of the third subject is past a predetermined line in the second image data in a predetermined direction.
(6) The reasoning apparatus according to (3) above, in which the output section counts the number of the fifth reference position.
(7) The reasoning apparatus according to any one of (1) to (6) above, in which
   the third reference position is a position to which the first reference position has moved, and
   the fourth reference position is a position to which the second reference position has moved.
(8) The reasoning apparatus according to any one of (1) to (6) above, in which
   the third reference position is an unmoved position of the first reference position does, and
   the fourth reference position is a position to which the second reference position has moved.
(9) The reasoning apparatus according to any one of (1) to (6) above, in which
   the third reference position is a position to which the first reference position has moved, and
   the fourth reference position is an unmoved position of the second reference position does.
(10) A reasoning method including:
   acquiring second image data and a trained model obtained on the basis of
      a third reference position and a fourth reference position that are obtained by a moving process of moving a first reference position of a first subject captured in first image data and a second reference position of a second subject captured in the first image data away from each other, and
      a third relative position and a fourth relative position that are obtained on the basis of a first relative position of a predetermined area of the first subject relative to the first reference position, a second relative position of a predetermined area of the second subject relative to the second reference position and the moving process; and
   obtaining a fifth reference position of a third subject captured in the second image data and a fifth relative position of a predetermined area of the third subject relative to the fifth reference position on the basis of the trained model and the second image data.
(11) A program that causes a computer to function as:
   a reasoning apparatus including
   an acquiring section that acquires second image data and a trained model obtained on the basis of
      a third reference position and a fourth reference position that are obtained by a moving process of moving a first reference position of a first subject captured in first image data and a second reference position of a second subject captured in the first image data away from each other, and
      a third relative position and a fourth relative position that are obtained on the basis of a first relative position of a predetermined area of the first subject relative to the first reference position, a second relative position of a predetermined area of the second subject relative to the second reference position and the moving process, and
   a reasoning section that obtains a fifth reference position of a third subject captured in the second image data and a fifth relative position of a predetermined area of the third subject relative to the fifth reference position on the basis of the trained model and the second image data.

### [Reference Signs List]

- 10:: Information processing system
- 110:: Control section
- 120:: Manipulation section
- 130:: Sensor section
- 140:: Storage section
- 150:: Communication section
- 160:: Presenting section
- 112:: CNN recognition processing section
- 114:: Post-processing section
- 116:: Output section
- 118:: CNN training section

## Claims

1. A reasoning apparatus comprising:
an acquiring section that acquires second image data and a trained model obtained on a basis of
a third reference position and a fourth reference position that are obtained by a moving process of moving a first reference position of a first subject captured in first image data and a second reference position of a second subject captured in the first image data away from each other, and
a third relative position and a fourth relative position that are obtained on a basis of a first relative position of a predetermined area of the first subject relative to the first reference position, a second relative position of a predetermined area of the second subject relative to the second reference position, and the moving process; and
a reasoning section that obtains a fifth reference position of a third subject captured in the second image data and a fifth relative position of a predetermined area of the third subject relative to the fifth reference position on a basis of the trained model and the second image data.

2. The reasoning apparatus according to claim 1, wherein the reasoning apparatus includes a processing section that computes a position of the predetermined area of the third subject by adding together the fifth reference position and the fifth relative position.

3. The reasoning apparatus according to claim 2, wherein the reasoning apparatus includes an output section that performs a process according to the position of the predetermined area of the third subject.

4. The reasoning apparatus according to claim 3, wherein the output section controls presentation of information representing the position of the predetermined area of the third subject.

5. The reasoning apparatus according to claim 3, wherein the output section identifies whether or not the position of the predetermined area of the third subject is past a predetermined line in the second image data in a predetermined direction.

6. The reasoning apparatus according to claim 3, wherein the output section counts the number of the fifth reference position.

7. The reasoning apparatus according to claim 1, wherein
the third reference position is a position to which the first reference position has moved, and
the fourth reference position is a position to which the second reference position has moved.

8. The reasoning apparatus according to claim 1, wherein
the third reference position is an unmoved position of the first reference position does, and
the fourth reference position is a position to which the second reference position has moved.

9. The reasoning apparatus according to claim 1, wherein
the third reference position is a position to which the first reference position has moved, and
the fourth reference position is an unmoved position of the second reference position does.

10. A reasoning method comprising:
acquiring second image data and a trained model obtained on a basis of
a third reference position and a fourth reference position that are obtained by a moving process of moving a first reference position of a first subject captured in first image data and a second reference position of a second subject captured in the first image data away from each other, and
a third relative position and a fourth relative position that are obtained on a basis of a first relative position of a predetermined area of the first subject relative to the first reference position, a second relative position of a predetermined area of the second subject relative to the second reference position and the moving process; and
obtaining a fifth reference position of a third subject captured in the second image data and a fifth relative position of a predetermined area of the third subject relative to the fifth reference position on a basis of the trained model and the second image data.

11. A program that causes a computer to function as:
a reasoning apparatus including
an acquiring section that acquires second image data and a trained model obtained on a basis of
a third reference position and a fourth reference position that are obtained by a moving process of moving a first reference position of a first subject captured in first image data and a second reference position of a second subject captured in the first image data away from each other, and
a third relative position and a fourth relative position that are obtained on a basis of a first relative position of a predetermined area of the first subject relative to the first reference position, a second relative position of a predetermined area of the second subject relative to the second reference position and the moving process, and
a reasoning section that obtains a fifth reference position of a third subject captured in the second image data and a fifth relative position of a predetermined area of the third subject relative to the fifth reference position on a basis of the trained model and the second image data.
